(19) Europäisches Patentamt
European Patent Office
Office européen des brevets

(11) **EP 4 382 863 A2**

(12) **EUROPEAN PATENT APPLICATION**

(43) Date of publication:
**12.06.2024 Bulletin 2024/24**

(21) Application number: **23209643.8**

(22) Date of filing: **14.11.2023**

(51) International Patent Classification (IPC):
**G01C 21/00** $^{(2006.01)}$

(52) Cooperative Patent Classification (CPC):
**G01C 21/383**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.11.2022 JP 2022182433
13.12.2022 JP 2022198569
13.12.2022 JP 2022198427**

(71) Applicant: **CANON KABUSHIKI KAISHA
Tokyo 146-8501 (JP)**

(72) Inventors:
- **NUMAKAMI, Yukio**
  **Tokyo, 146-8501 (JP)**
- **FUKAMACHI, Hitoshi**
  **Tokyo, 146-8501 (JP)**
- **OHIRA, Shinji**
  **Tokyo, 146-8501 (JP)**
- **FUJIKI, Masakazu**
  **Tokyo, 146-8501 (JP)**
- **OOBA, Hideaki**
  **Tokyo, 146-8501 (JP)**

(74) Representative: **TBK
Bavariaring 4-6
80336 München (DE)**

(54) **MAP DATA GENERATION DEVICE, STORAGE MEDIUM, AND MAP DATA GENERATION METHOD**

(57) In order to provide a map suitable for a movable apparatus which autonomously moves, a map data generation device includes a spatial data acquisition unit configured to acquire spatial data generated by measuring an object present in a space with a sensor, an attribute data acquisition unit configured to acquire attribute data indicating an attribute of a movable apparatus which autonomously moves in the space, and a map data generation unit configured to generate map data which is used when the movable apparatus autonomously moves in the space on the basis of the attribute data and the spatial data.

FIG. 7

**Description**

BACKGROUND OF THE INVENTION

Field of the Invention

The present invention relates to a map data generation device, a storage medium, a map data generation method, and the like.

Description of the Related Art

Currently, autonomous mobile robots which autonomously move at various places, such as office buildings, residences, and distribution centers, and carry out work are being developed. Such movable apparatuses ascertain a space as a map such as point cloud data or a set of feature points and autonomously move by measuring each of surrounding objects with a sensor.

In addition, regarding a technology of providing such a map to movable apparatuses which autonomously move, for example, Japanese Patent Laid-Open No. 2021-77053 discloses a map information providing system.

This map information providing system includes a database, an image data generation unit, and a data transmission/reception unit. The database stores three-dimensional point cloud data related to an area where an autonomous mobile device travels.

The image data generation unit generates two-dimensional planar image data by cutting out two-dimensional point cloud data of a height designated by the autonomous mobile device from the three-dimensional point cloud data read from the database. The data transmission/reception unit can transmit two-dimensional planar image data or point cloud data generated by the image data generation unit to the autonomous mobile device.

However, the movable apparatuses described above differ from each other in kind of a sensor mounted therein, accuracy in the case in which a sensor measures an object present in a space, range allowing a sensor to measure an object present in a space, position where a sensor is attached, and the like. For this reason, the map information providing system disclosed in Japanese Patent Laid-Open No. 2021-77053 may not be able to provide a map suitable for each movable apparatus autonomously moving in a space.

SUMMARY OF THE INVENTION

A map data generation device of one aspect of the present invention includes at least one processor or circuit configured to function as: a spatial data acquisition unit configured to acquire spatial data generated by measuring an object present in a space with a sensor; an attribute data acquisition unit configured to acquire attribute data indicating an attribute of a movable apparatus which autonomously moves in the space; and a map data generation unit configured to generate map data which is used when the movable apparatus autonomously moves in the space on the basis of the attribute data and the spatial data.

Further features of the present invention will become apparent from the following description of embodiments with reference to the attached drawings.

BRIEF DESCRIPTION OF THE DRAWINGS

Fig. 1 is a view showing an example of movable apparatuses, a map data generation device, and the like according to First Embodiment.
Fig. 2 is a view showing an example of a screen used by the movable apparatuses, the map data generation device, and the like according to First Embodiment.
Fig. 3 is a view showing an example of a hardware constitution of the map data generation device according to First Embodiment.
Fig. 4 is a view showing an example of a software constitution of the map data generation device according to First Embodiment.
Fig. 5 is a view showing an example of attribute data according to First Embodiment.
Fig. 6 is a flowchart showing an example of processing in which spatial data is generated by the map data generation device according to First Embodiment.
Fig. 7 is a flowchart showing an example of processing in which map data is provided to the movable apparatuses by the map data generation device according to First Embodiment.
Fig. 8 is a view showing an example of a software constitution of a map data generation device according to Second Embodiment.
Fig. 9 is a flowchart showing an example of processing in which spatial data is generated by the map data generation device according to Second Embodiment.
Fig. 10 is a flowchart showing an example of processing in which map data is provided to the movable apparatuses by the map data generation device according to Second Embodiment.
Fig. 11 is a view showing an example of a software constitution of a map data generation device according to Third Embodiment.
Fig. 12 is a view showing an example of the attribute data according to Third Embodiment.
Fig. 13 is a flowchart showing an example of processing executed by a map data providing device according to Third Embodiment.
Fig. 14 is a view showing an example of a software constitution of a map data generation device according to Fourth Embodiment.

Fig. 15 is a flowchart showing an example of processing executed by the map data generation device according to Fourth Embodiment.

Fig. 16 is a flowchart showing an example of processing in which the map data generation device according to Fourth Embodiment evaluates validity of first spatial data as map data.

Fig. 17 is a flowchart showing an example of processing in which the map data generation device according to Fourth Embodiment manages spatial data stored in a storage medium.

DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

<First Embodiment>

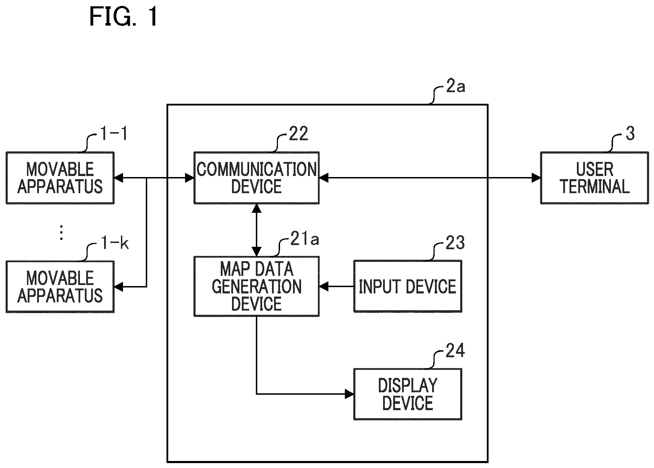

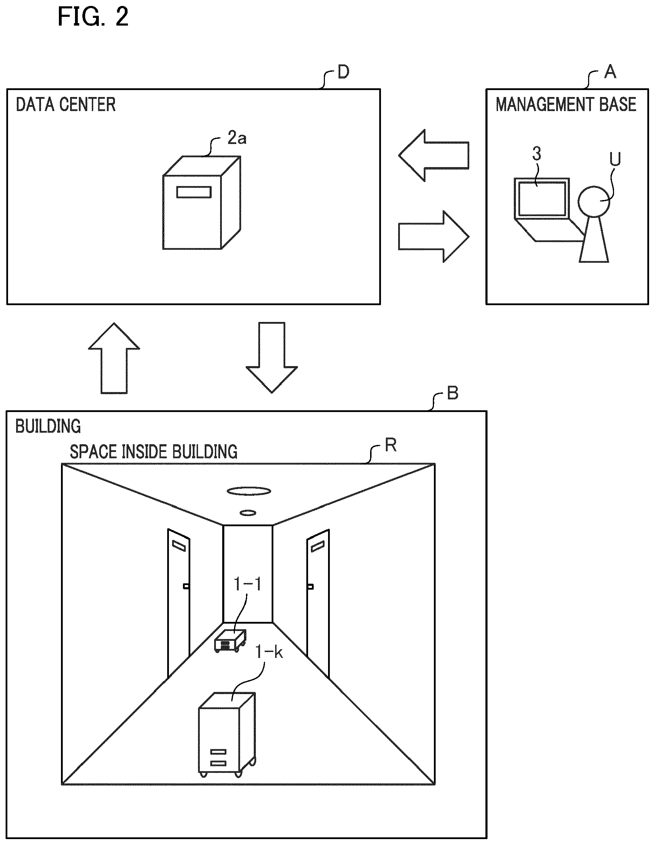

Fig. 1 is a view showing an example of movable apparatuses, a map data generation device, and the like according to First Embodiment. Fig. 2 is a view showing an example of a screen used by the movable apparatuses, the map data generation device, and the like according to First Embodiment. Figs. 1 and 2 show a movable apparatus 1-1 and so on to a movable apparatus 1-k (k: an integer of 1 or larger), an information processing device 2a, and a user terminal 3.

For example, the movable apparatus 1-1 and so on to the movable apparatus 1-k are autonomous mobile robots, automatic guided vehicles (AGV), or the like carrying out work such as cleaning or luggage transportation in a space R inside a building B such as the office building shown in Fig. 2.

A sensor is mounted in each of the movable apparatus 1-1 and so on to the movable apparatus 1-k, and they autonomously move inside the space R by ascertaining the space R around themselves through self-position/orientation measurement such as simultaneous localization and mapping (SLAM) using sensor data thereof. For example, this sensor is a two-dimensional or three-dimensional light detection and ranging (LIDAR) or a stereo camera.

In addition, the movable apparatus 1-1 and so on to the movable apparatus 1-k require a map of the space R when they autonomously move inside the space R. For example, this map is data expressing the inside of the space R as two-dimensional or three-dimensional point cloud data or data expressed as a set of feature points of an object recognized from image data. In the following description, such data will be referred to as map data.

For example, the information processing device 2a is installed in a data center D shown in Fig. 2. As shown in Fig. 1, the information processing device 2a includes a map data generation device 21a, a communication device 22, an input device 23, and a display device 24.

The map data generation device 21a generates the map data described above and transmits the map data to the movable apparatus 1-1 and so on to the movable apparatus 1-k which are newly introduced into the space R inside the building B. Details of the map data generation device 21a will be described below. The communication device 22 realizes communication between the information processing device 2a and the movable apparatus 1-1 and so on to the movable apparatus 1-k or the user terminal 3.

For example, the input device 23 is a mouse or a keyboard, which is used for inputting data, an instruction, or the like to the information processing device 2a. For example, the display device 24 is a display, which displays information presented to a user U or the like of the information processing device 2a.

For example, the user terminal 3 is a computer installed in a management base A shown in Fig. 2. The user terminal 3 is used for operating the information processing device 2a from the management base A that is a place different from the data center D.

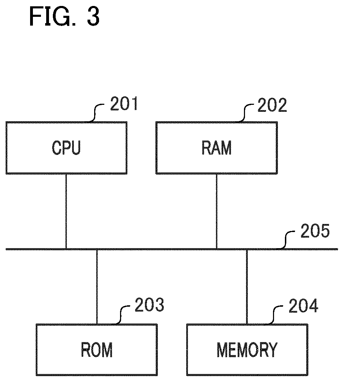

Next, a hardware constitution of the map data generation device according to First Embodiment will be described with reference to Fig. 3. Fig. 3 is a view showing an example of a hardware constitution of the map data generation device according to First Embodiment.

The map data generation device 21a includes a central processing unit (CPU) 201, a random access memory (RAM) 202, a read only memory (ROM) 203, a memory 204, and a bus 205, which are shown in Fig. 3.

The CPU 201 realizes each of the functions of the map data generation device 21a by reading and executing a program. The RAM 202 is a recording medium in which the program read and executed by the CPU 201 is temporarily developed.

The ROM 203 is a recording medium in which the program read and executed by the CPU 201 is saved. The memory 204 is a recording medium in which spatial data (which will be described below) and the like are saved. The bus 205 connects the CPU 201, the RAM 202, the ROM 203, and the memory 204 in a form in which they can communicate with each other.

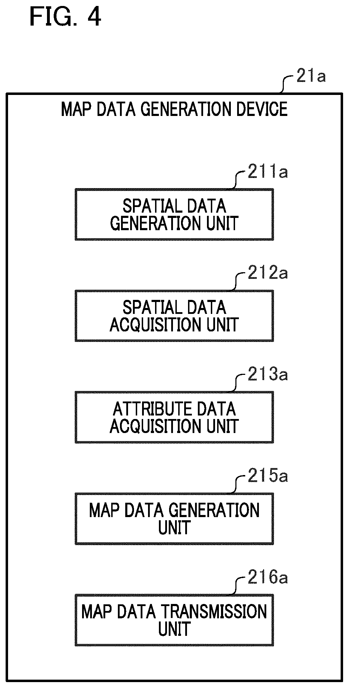

Next, a software constitution of the map data generation device according to First Embodiment will be described with reference to Fig. 4. Fig. 4 is a view showing an example of a software constitution of the map data generation device according to First Embodiment. The map data generation device 21a includes a spatial data generation unit 211a, a spatial data acquisition unit 212a, an attribute data acquisition unit 213a, a map data generation unit 215a, and a map data transmission unit 216a which are shown in Fig. 4.

The spatial data generation unit 211a generates the spatial data by measuring an object present in the space R with a sensor. For example, the said sensor is a two-dimensional or three-dimensional LIDAR or a stereo camera.

In addition, the said sensor may be a sensor mounted in each of the movable apparatus 1-1 or so on to the movable apparatus 1-k which is newly introduced into the space R or may be a sensor of another movable apparatus which has already been introduced into the space R. Alternatively, the said sensor may be a sensor used by a worker who measures an object present in the space R.

For example, the said spatial data is three-dimensional spatial data constituted of data including at least one of the three-dimensional point cloud data expressing an object present in the space R and structures such as walls and the ceiling of the building B, and plane data including information of the shape and the orientation of a plane.

In addition, the spatial data may be data obtained by mapping information related to the color of an object with the plane data. Alternatively, the spatial data may be two-dimensional spatial data including at least one of the two-dimensional point cloud data from which an object present in the space R and the structures such as walls and the ceiling of the building B are cut out at a predetermined height in a three-dimensional space, and the line data including orientations of lines, positions of end points of lines, and the like.

For example, the spatial data generation unit 211a generates the spatial data capable of generating the map data allowed to be used in common among at least two of the movable apparatus 1-1 and so on to the movable apparatus 1-k.

For example, the spatial data generation unit 211a may employ, as such spatial data, the spatial data generated using one sensor. In this case, for example, it is preferable that the spatial data generation unit 211a employ, as such spatial data, the spatial data generated using a sensor capable of measuring an object present in the space R with an accuracy as high as possible.

In addition, in this case, for example, it is preferable that the spatial data generation unit 211a employ, as such spatial data, the spatial data generated using a sensor of which the range allowing measurement of an object present in the space R is as wide as possible.

Alternatively, the spatial data generation unit 211a may process a plurality of pieces of spatial data generated using each of a plurality of sensors into one piece of spatial data to obtain such spatial data. In this case, for example, it is preferable that the spatial data generation unit 211a process them into one piece of spatial data by enhancing contribution of the spatial data generated using a sensor capable of measuring an object present in the space R with an accuracy as high as possible.

Alternatively, the spatial data generation unit 211a may generate, as the spatial data, the spatial data in the same form as the map data generated by the map data generation unit 215a. For example, if the form of the map data is a three-dimensional point cloud data form, the spatial data generation unit 211a may generate the spatial data in the three-dimensional point cloud data form.

In addition, for example, if the form of the map data is the three-dimensional point cloud data form, the spatial data generation unit 211a may generate, as the spatial data, the three-dimensional point cloud data of which the density of the point cloud differs from that of the map data even in the three-dimensional point cloud data form.

In this case, for example, the spatial data becomes point cloud data generated using a sensor having a high accuracy, and the map data becomes the point cloud data of which the density of the point cloud is lower than that of the spatial data. However, in this case, it is preferable that the map data include a point cloud of which the density is neither excessive nor deficient when the movable apparatus 1-1 autonomously moves inside the space R.

Alternatively, the spatial data generation unit 211a may generate, as the spatial data, the spatial data in a form different from that of the map data generated by the map data generation unit 215a. For example, even if the form of the map data is the three-dimensional point cloud data form, the spatial data generation unit 211a may generate the spatial data in a three-dimensional polygon data form.

The spatial data acquisition unit 212a acquires the spatial data generated by measuring an object present in the space R with the sensor. In addition, the spatial data acquisition unit 212a may also acquire building data, spatial data, and the like attached to the spatial data together with the spatial data.

For example, the building data is data identifying the building including the space R in which at least one of the movable apparatus 1-1 and so on to the movable apparatus 1-k carries out work while moving and indicates the name of the building, and the information, the position, the address, and the like uniquely identifying the building.

For example, the spatial data is data identifying the space R and indicates information such as a space ID uniquely identifying a space, and the number of floors, areas, rooms, and the like inside the building. In addition, the spatial data may be saved in the memory 204 in association with at least one of the building data, the spatial data, and the like attached to itself.

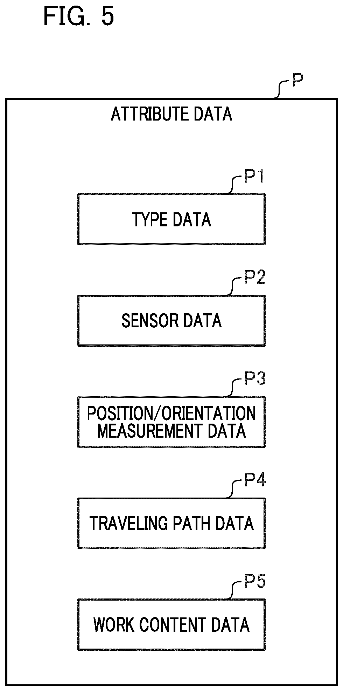

Fig. 5 is a view showing an example of attribute data according to First Embodiment. Fig. 5 shows attribute data P. For example, the attribute data acquisition unit 213a acquires the attribute data P indicating an attribute of the movable apparatus autonomously moving in the space R from the movable apparatus 1-1.

As shown in Fig. 5, the attribute data P includes type data P1, sensor data P2, position/orientation measurement data P3, traveling path data P4, and work content data P5. The attribute data acquisition unit 213a may acquire the attribute data of the movable apparatus 1-1 from an apparatus or the like other than the movable apparatus 1-1.

For example, the attribute data acquisition unit 213a may acquire the attribute data input by a user who manages the movable apparatus 1-1. Alternatively, the attribute data acquisition unit 213a may acquire the attribute data by reading the code stuck on a surface of the building B or the movable apparatus 1-1. For example, this code is a two-dimensional code. In addition, the attribute data acquisition unit 213a similarly acquires the attribute data for each of the movable apparatus 1-2 and so on to the movable apparatus 1-k.

The type data P1 indicates information related to at least one of the type, the specification, the function, and the like of the movable apparatus 1-1. For example, the information related to the type is information, a classification, and the like uniquely identifying the name of the type, the model name, the unit name, the product name, the type, and the like.

The information related to the specification is the size (the overall length, the overall width, the overall height, and the like) and the weight of the movable apparatus 1-1; the size, the weight, and the like of loadable luggage; the luggage transportation method such as stacking, lifting, and towing; the movement speed; the movement direction; the radius of rotation; the operation part such as an arm; and the like.

The information related to the function is the function such as transportation, cleaning, and security corresponding to the classification of the movable apparatus; and the functions of common units such as the notification unit, the display unit, and the input unit which are not dependent on the classification of the movable apparatus. In addition, the type data P1 can also be used for management of the movable apparatus 1-1.

The sensor data P2 indicates at least one of the kind of the sensor, the accuracy in the case in which the sensor measures an object present in the space, the range allowing the sensor to measure an object present in the space, the position, the orientation, and the like of attachment of the sensor.

For example, the information related to the kind of the sensor is the classification, the method, and the like of the sensor such as a two-dimensional or three-dimensional LIDAR and a stereo camera. If the sensor is a LIDAR, the information related to the accuracy of the sensor, the measurable range, and the like is the detection distance, the resolution, the detection field angle, the angular resolution, the number of times of scanning, and the like.

The information related to the position, the orientation, and the like of attachment of the sensor is information related to at least one of the position and the direction of attachment of the sensor to a main body outer case of the movable apparatus 1-1. In addition, the said sensor is a sensor mounted in the movable apparatus 1-1.

The position/orientation measurement data P3 is information related to the processing method performed by the movable apparatus 1-1 measuring at least one of the position and the orientation of itself. The traveling path data P4 is information indicating a transit position, the speed, and the like when the movable apparatus 1-1 travels inside the space R. The work content data P5 indicates contents of work performed by the movable apparatus 1-1 inside the space R.

The map data generation unit 215a generates the map data used when the movable apparatus 1-1 which has been newly introduced into the space R autonomously moves in the space R on the basis of the spatial data and the attribute data of the movable apparatus 1-1. Similarly, the map data generation unit 215a generates the map data used when the movable apparatus 1-k which has been newly introduced into the space R autonomously moves in the space R on the basis of the spatial data and the attribute data of the movable apparatus 1-k.

In addition, if the map data used by the movable apparatus 1-1 is generated, it is preferable that the map data generation unit 215a generate the map data having the quantity of data, the density of data, and the like which are neither excessive nor deficient when the movable apparatus 1-1 autonomously moves inside the space R.

Similarly, if the map data used by the movable apparatus 1-k is generated, it is preferable that the map data generation unit 215a generate the map data having the quantity of data, the density of data, and the like which are neither excessive nor deficient when the movable apparatus 1-k autonomously moves inside the space R.

In addition, the said quantity of data has a positive correlation with the number of points included in the point cloud data, the number of feature points used for ascertaining the space R, and the like. In addition, the said density of data has a positive correlation with the density of points included in the point cloud data, the density of feature points used for ascertaining the space R, and the like. Accordingly, the data size of the map data can be reduced compared to when the spatial data itself is provided.

For example, the map data generation unit 215a may generate the map data from the spatial data on the basis of information related to the kind of the sensor of the movable apparatus 1-1 included in the sensor data P2, the accuracy of the sensor, and the like. In addition, for example, the map data generation unit 215a may generate the map data from the spatial data on the basis of information related to the measurable range of the sensor of the movable apparatus 1-1 included in the sensor data P2, the position, the orientation, and the like of attachment of the sensor.

Specifically, if the sensor of the movable apparatus 1-1 is a three-dimensional LIDAR, the map data generation unit 215a generates, from the spatial data, the three-dimensional point cloud data that is a range allowing the three-dimensional LIDAR to perform measurement in the space R and has the quantity of data which is neither excessive nor deficient in order for the three-dimensional LIDAR to measure the space R.

Accordingly, the map data generation unit 215a can provide suitable map data corresponding to the classification, the characteristics, and the like of the sensor of the movable apparatus 1-1 and can reduce the data size of the map data to an appropriate data size.

Alternatively, the map data generation unit 215a may generate, as the attribute data, the map data from the spatial data excluding the space in a range equal to or larger than a predetermined height exceeding the overall height of the movable apparatus 1-1 on the basis of information related to the size of the movable apparatus 1-1 included in the type data P 1.

In addition, the map data generation unit 215a may adopt, as the predetermined height, a height higher than the sum of the overall height of the movable apparatus 1-1 and the height of loadable luggage on the basis of information of the size of the loadable luggage, in addition to the size of the movable apparatus 1-1. Accordingly, the map data generation unit 215a can reduce the data size by providing only the data of a space necessary when the movable apparatus 1-1 autonomously moves inside the space R.

The map data transmission unit 216a transmits the map data generated on the basis of the spatial data and the attribute data of the movable apparatus 1-1 to the movable apparatus 1-1. Similarly, the map data transmission unit 216a transmits the map data generated on the basis of the spatial data and the attribute data of the movable apparatus 1-k to the movable apparatus 1-k.

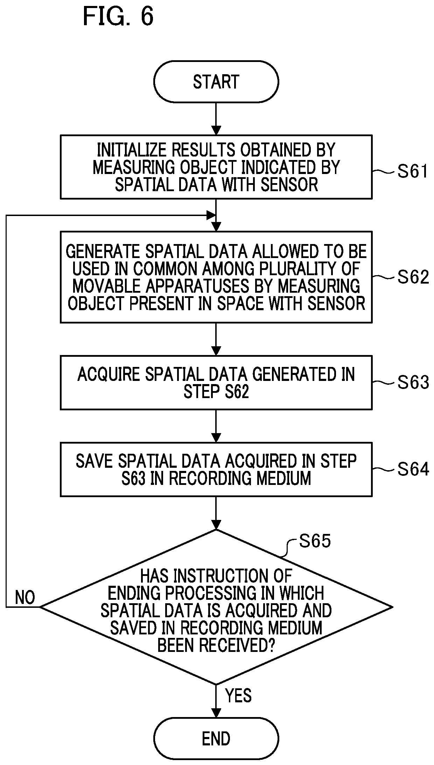

Next, with reference to Fig. 6, an example of processing in which spatial data is generated by the map data generation device 21a will be described. Fig. 6 is a flowchart showing an example of processing in which spatial data is generated by the map data generation device according to First Embodiment.

In Step S61, the spatial data generation unit 211a initializes the results obtained by measuring an object indicated by the spatial data with the sensor.

In Step S62, the spatial data generation unit 211a generates the spatial data allowed to be used in common among a plurality of movable apparatuses by measuring an object present in the space with the sensor.

In Step S63, the spatial data acquisition unit 212a acquires the spatial data generated in Step S62.

In Step S64, the spatial data acquisition unit 212a saves the spatial data acquired in Step S63 in the recording medium.

In Step S65, the spatial data generation unit 211a judges whether or not an instruction of ending the processing in which the spatial data is acquired and saved in the recording medium has been received. If it is judged that an instruction of ending the processing in which the spatial data is acquired and saved in the recording medium has been received (Step S65: YES), the spatial data generation unit 211a ends the processing.

On the other hand, if it is judged that an instruction of ending the processing in which the spatial data is acquired and saved in the recording medium has not been received (Step S65: NO), the spatial data generation unit 211a returns the processing to Step S62.

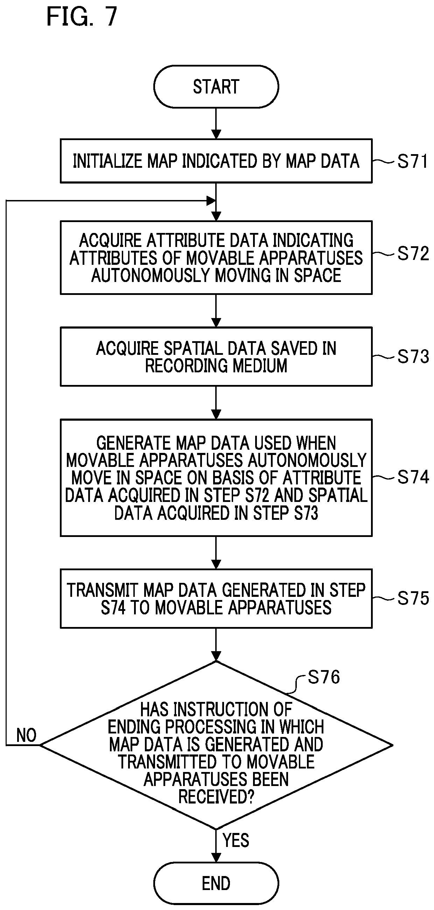

Next, with reference to Fig. 7, an example of processing in which map data is provided to movable apparatuses by the map data generation device 21a will be described. Fig. 7 is a flowchart showing an example of processing in which map data is provided to the movable apparatuses by the map data generation device according to First Embodiment.

In Step S71, the map data generation unit 215a initializes the map indicated by the map data.

In Step S72, the attribute data acquisition unit 213a acquires the attribute data indicating attributes of the movable apparatuses autonomously moving in the space.

In Step S73, the spatial data acquisition unit 212a acquires the spatial data saved in the recording medium.

In Step S74, the map data generation unit 215a generates the map data which is used when the movable apparatuses autonomously move in the space on the basis of the attribute data acquired in Step S72 and the spatial data acquired in Step S73.

In Step S75, the map data transmission unit 216a transmits the map data generated in Step S74 to the movable apparatuses.

In Step S76, the map data generation unit 215a judges whether or not an instruction of ending the processing in which the map data is generated and transmitted to the movable apparatuses has been received. If it is judged that an instruction of ending the processing in which the map data is generated and transmitted to the movable apparatuses has been received (Step S76: YES), the map data generation unit 215a ends the processing.

On the other hand, if it is judged that an instruction of ending the processing in which the map data is generated and transmitted to the movable apparatuses has not been received (Step S76: NO), the map data generation unit 215a returns the processing to Step S72.

<Second Embodiment>

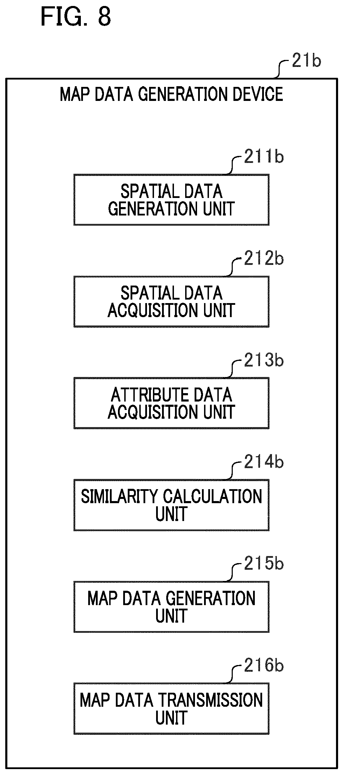

Hereinafter, Second Embodiment of the present invention will be described with reference to Figs. 8 to 10. In addition, in description of Second Embodiment, the description will be focused on contents differing from those of First Embodiment, and description of contents duplicating those of First Embodiment will be suitably omitted.

Fig. 8 is a view showing an example of a software constitution of a map data generation device according to Second Embodiment. As shown in Fig. 8, a map data generation device 21b includes a spatial data generation unit 211b, a spatial data acquisition unit 212b, an attribute data acquisition unit 213b, a similarity calculation unit 214b, a map data generation unit 215b, and a map data transmission unit 216b.

The spatial data generation unit 211b generates the spatial data by measuring an object present in the space R with a sensor. For example, the spatial data generation unit 211b generates a plurality of pieces of spatial data for each of the movable apparatuses. More specifically, the spatial data generation unit 211b generates a plurality of pieces of spatial data associated with the movable apparatus 1-1 and generates a plurality of pieces of spatial data associated with the movable apparatus 1-k.

In addition, it is preferable that these pieces of spatial data be generated using a sensor of a kind as close as possible to the kind of the sensor mounted in each of the movable apparatus 1-1 and so on to the movable apparatus 1-k. Alternatively, it is preferable that these pieces of spatial data be generated using a sensor having an accuracy as close as possible to the accuracy in the case in which the sensor mounted in each of the movable apparatus 1-1 and so on to the movable apparatus 1-k measures an object present in the space R.

Alternatively, it is preferable that these pieces of spatial data be generated using a sensor having a range as close as possible to the range allowing the sensor mounted in each of the movable apparatus 1-1 and so on to the movable apparatus 1-k to measure an object present in the space R.

Alternatively, it is preferable that these pieces of spatial data be generated using a sensor attached to a position as close as possible to the position where the sensor mounted in each of the movable apparatus 1-1 and so on to the movable apparatus 1-k is attached to each of the movable apparatus 1-1 and so on to the movable apparatus 1-k.

The spatial data acquisition unit 212b acquires the spatial data generated by measuring an object present in the space R with the sensor. For example, the spatial data acquisition unit 212b acquires a plurality of pieces of spatial data for each of the movable apparatuses.

More specifically, the spatial data generation unit 211b acquires a plurality of pieces of spatial data associated with the movable apparatus 1-1 and acquires a plurality of pieces of spatial data associated with the movable apparatus 1-k.

The attribute data acquisition unit 213b acquires the attribute data P indicating the attribute of the movable apparatus 1-1 autonomously moving inside the space R from the movable apparatus 1-1. For example, the attribute data acquisition unit 213b acquires the attribute data for each of the movable apparatuses. More specifically, the attribute data acquisition unit 213b acquires the attribute data associated with the movable apparatus 1-1 and acquires the attribute data associated with the movable apparatus 1-k.

The similarity calculation unit 214b calculates a similarity indicating the degree of similarity of the movable apparatus with respect to other movable apparatuses on the basis of the attribute data P of the movable apparatus 1-1. For example, the similarity calculation unit 214b calculates a similarity indicating the degree of similarity of the movable apparatus 1-1 with respect to movable apparatuses other than the movable apparatus 1-1.

Similarly, the similarity calculation unit 214b calculates a similarity indicating the degree of similarity of the movable apparatus 1-k with respect to movable apparatuses other than the movable apparatus 1-k. For example, the value of the similarity increases as at least one of the shapes, the dimensions, and the weights of the movable apparatuses; at least one of the numbers, the positions, the directions, and the accuracies of the sensors attached to the movable apparatuses; and the like are close to each other.

The map data generation unit 215b generates the map data used when the movable apparatus 1-1 which has been newly introduced into the space R autonomously moves in the space R on the basis of the spatial data and the attribute data of the movable apparatus 1-1. Specifically, the map data generation unit 215b selects the spatial data from a plurality of pieces of spatial data generated for each of the movable apparatuses on the basis of the similarity.

Further, the map data generation unit 215b generates the map data using the selected spatial data. For example, the map data generation unit 215b generates the map data using the spatial data selected from the plurality of pieces of spatial data generated for the movable apparatus 1-1. Similarly, the map data generation unit 215b generates the map data to be used by the movable apparatus 1-k using the spatial data generated for the movable apparatus 1-k.

The map data transmission unit 216b transmits the map data generated on the basis of the spatial data and the attribute data of the movable apparatus 1-1 to the movable apparatus 1-1. Similarly, the map data transmission unit 216b transmits the map data generated on the basis of the spatial data and the attribute data of the movable apparatus 1-k to the movable apparatus 1-k.

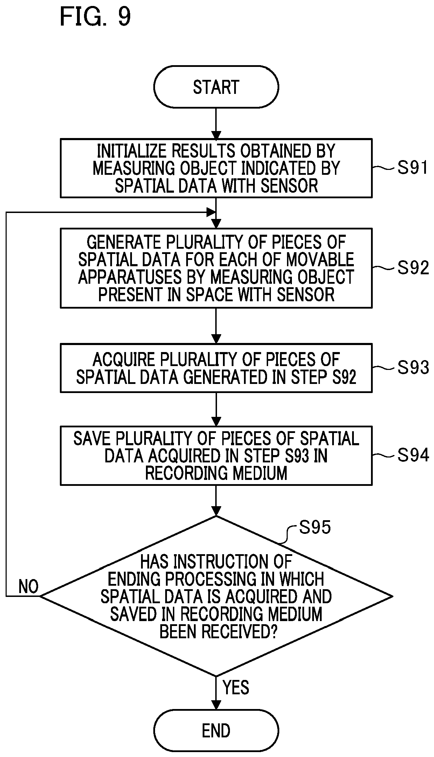

Next, with reference to Fig. 9, an example of processing in which spatial data is generated by the map data generation device 21b will be described. Fig. 9 is a flowchart showing an example of processing in which spatial data is generated by the map data generation device according to Second Embodiment.

In Step S91, the spatial data generation unit 211b initializes the results obtained by measuring an object indicated by the spatial data with the sensor.

In Step S92, the spatial data generation unit 211b generates a plurality of pieces of spatial data for each of the movable apparatuses by measuring an object present in the space with the sensor.

In Step S93, the spatial data acquisition unit 212b acquires the plurality of pieces of spatial data generated in Step S92.

In Step S94, the spatial data acquisition unit 212b saves the plurality of pieces of spatial data acquired in Step S93 in the recording medium.

In Step S95, the spatial data generation unit 211b judges whether or not an instruction of ending the processing in which the spatial data is acquired and saved in the recording medium has been received. If it is judged that an instruction of ending the processing in which the spatial data is acquired and saved in the recording medium has been received (Step S95: YES), the spatial data generation unit 211b ends the processing.

On the other hand, if it is judged that an instruction of ending the processing in which the spatial data is acquired and saved in the recording medium has not been received (Step S95: NO), the spatial data generation unit 211b returns the processing to Step S92.

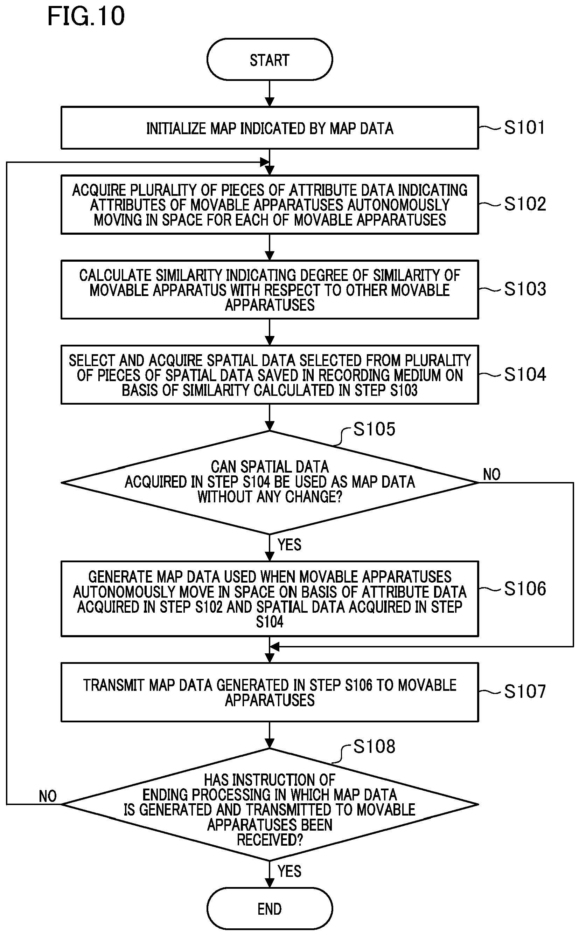

Next, with reference to Fig. 10, an example of processing in which map data is provided to movable apparatuses by the map data generation device 21b will be described. Fig. 10 is a flowchart showing an example of processing in which map data is provided to the movable apparatuses by the map data generation device according to Second Embodiment.

In Step S101, the map data generation unit 215b initializes the map indicated by the map data.

In Step S102, the attribute data acquisition unit 213b acquires a plurality of pieces of attribute data indicating the attributes of the movable apparatuses autonomously moving in the space for each of the movable apparatuses.

In Step S103, the similarity calculation unit 214b calculates a similarity indicating the degree of similarity of the movable apparatus with respect to other movable apparatuses.

In Step S104, the spatial data acquisition unit 212b selects and acquires the spatial data selected from the plurality of pieces of spatial data saved in the recording medium on the basis of the similarity calculated in Step S103.

In Step S105, the map data generation unit 215b judges whether or not the spatial data acquired in Step S104 can be used as the map data without any change. If it is judged that the spatial data acquired in Step S104 can be used as the map data without any change (Step S105: YES), the map data generation unit 215b proceeds the processing to Step S106.

On the other hand, if it is judged that the spatial data acquired in Step S104 cannot be used as the map data without any change (Step S105: NO), the map data generation unit 215b proceeds the processing to Step S107.

In Step S106, the map data generation unit 215b generates the map data which is used when the movable apparatuses autonomously move in the space on the basis of the attribute data acquired in Step S102 and the spatial data acquired in Step S104.

In Step S107, the map data transmission unit 216b transmits the map data generated in Step S106 to the movable apparatuses.

In Step S108, the map data generation unit 215b judges whether or not an instruction of ending the processing in which the map data is generated and transmitted to the movable apparatuses has been received. If it is judged that an instruction of ending the processing in which the map data is generated and transmitted to the movable apparatuses has been received (Step S108: YES), the map data generation unit 215b ends the processing.

On the other hand, if it is judged that an instruction of ending the processing in which the map data is generated and transmitted to the movable apparatuses has not been received (Step S108: NO), the map data generation unit 215b returns the processing to Step S 102.

At least one of the map data generation unit 215a and the map data generation unit 215b may generate the map data related to the range allowing the sensor mounted in the movable apparatus 1-1 to measure an object present in the space R on the basis of the sensor data P2.

Similarly, at least one of the map data generation unit 215a and the map data generation unit 215b may generate the map data related to the range allowing the sensor mounted in the movable apparatus 1-k to measure an object present in the space R.

Specifically, if the classification of the sensor is a stereo camera, the map data generation unit 215a may generate the map data from the spatial data excluding the data of the space not included in the field angle of the stereo camera from the position, the orientation, the direction, and the like of attachment of the sensor. Accordingly, at least one of the map data generation unit 215a and the map data generation unit 215b can reduce the data size of the map data.

Moreover, at least one of the map data generation unit 215a and the map data generation unit 215b may generate the map data from only the spatial data in the range of the paths in which the movable apparatus 1-1 and so on to the movable apparatus 1-k travel inside the space R on the basis of the traveling path data P4, in addition to the sensor data P2.

Accordingly, at least one of the map data generation unit 215a and the map data generation unit 215b can reduce the data size compared to that generated from the spatial data of the space R in its entirety.

Alternatively, at least one of the map data generation unit 215a and the map data generation unit 215b may generate the map data related to the range not allowing the sensor mounted in the movable apparatus 1-1 to measure an object present in the space R on the basis of the sensor data P2.

Similarly, at least one of the map data generation unit 215a and the map data generation unit 215b may generate the map data related to the range not allowing the sensor mounted in the movable apparatus 1-k to measure an object present in the space R.

For example, if the classification of the sensor is a two-dimensional LIDAR, the movable apparatus can only measure the space of a two-dimensional plane at the height of a position where the sensor is attached in the space R. Therefore, the movable apparatus cannot ascertain the presence of an object such as an obstacle present at a height not overlapping this two-dimensional plane.

In contrast, as described above, the map data generation unit 215a generates the map data related to the range not allowing the sensor mounted in the movable apparatus 1-1 to perform measurement. Therefore, the map data generation unit 215a allows the movable apparatus 1-1 to ascertain an object such as an obstacle present out of the range allowing the sensor to perform measurement and allows the movable apparatus 1-1 to stably move inside the space R.

In addition, the map data generation unit 215b selects similar spatial data for the movable apparatus from a plurality of pieces of spatial data generated by the spatial data generation unit 211b based on the similarity calculated by the similarity calculation unit 214b on the basis of the attribute data P, thereby generating the map data.

Accordingly, even if the movable apparatus 1-1 is not the same type as the movable apparatus which has already been introduced into the space R, the map data generation unit 215b can sort movable apparatuses which are similar thereto in type, sensor, or the like, and can generate the map data suitable for the movable apparatus 1-1 by diverting the spatial data generated for the movable apparatuses.

In addition, the map data generation device 21a may have functions other than the functions shown in Fig. 4. Similarly, the map data generation device 21b may have functions other than the functions shown in Fig. 8. For example, at least one of the map data generation device 21a and the map data generation device 21b may include a notification necessity judgment unit and an updating notification unit.

If the map data generation device 21a and the map data generation device 21b include a notification necessity judgment unit and an updating notification unit, the map data generation unit 215a and the map data generation unit 215b may update the map data on the basis of the attribute data and the spatial data. Examples of the case in which the map data is updated include a case in which the spatial data in accordance with a case in which the layout inside the space R is changed.

If the spatial data is updated, the notification necessity judgment unit judges whether or not there is a need to notify the movable apparatus 1-1 of the fact that the map data has been updated on the basis of the attribute data P and the range of the updated spatial data.

For example, if there is an influence on the map data of the movable apparatus 1-1 from the attribute data P and the range of the updated spatial data, the notification necessity judgment unit judges that there is a need to notify the movable apparatus 1-1 of the fact that the map data has been updated. Similarly, if the spatial data is updated, the notification necessity judgment unit judges whether or not there is a need to notify the movable apparatus 1-k of the fact that the map data has been updated.

For example, a case in which the spatial data is updated due to change in layout of a high place such as a place in the vicinity of the ceiling of the space R is assumed. If the sensor of the movable apparatus 1-1 is a stereo camera, the notification necessity judgment unit judges that the range of the updated spatial data is included in the range which can be measured by the stereo camera on the basis of the classification of the sensor indicated by the sensor data P2 and the range of the updated spatial data. Further, the notification necessity judgment unit judges that there is a need to notify the movable apparatus 1-1 of the fact that the map data has been updated.

On the other hand, if the sensor of the movable apparatus 1-k is a two-dimensional LIDAR and the height of the range allowing the sensor to perform measurement is lower than the height of that in which the layout is changed, the notification necessity judgment unit judges as follows.

That is, in such a case, the notification necessity judgment unit judges that the range of the updated spatial data is not included in the range which can be measured by the two-dimensional LIDAR on the basis of the classification of the sensor indicated by the sensor data P2 and the range of the updated spatial data. Further, the notification necessity judgment unit judges that there is no need to notify the movable apparatus 1-1 of the fact that the map data has been updated.

If it is judged that there is a need to notify a movable apparatus of the fact that the map data has been updated, the updating notification unit notifies the movable apparatus 1-1 of the fact that the map data has been updated. Similarly, if it is judged that there is a need to notify a movable apparatus of the fact that the map data has been updated, the updating notification unit notifies the movable apparatus 1-k of the fact that the map data has been updated.

For example, if the spatial data is updated due to change in layout inside the space R, the notification necessity judgment unit and the updating notification unit can notify only the movable apparatus having the map data influenced by the updated spatial data of the fact that the map data has been updated. Therefore, the notification necessity judgment unit and the updating notification unit can reduce processing loads of the movable apparatuses which do not receive notification, and the information processing device 2a or another information processing device.

Alternatively, at least one of the map data generation unit 215a and the map data generation unit 215b may generate new map data by converting the map data which has already been generated. Accordingly, even if the movable apparatus 1-1 cannot use the map data which has already been generated, at least one of the map data generation unit 215a and the map data generation unit 215b can convert the map data into the map data which can be used by the movable apparatus 1-1.

<Third Embodiment>

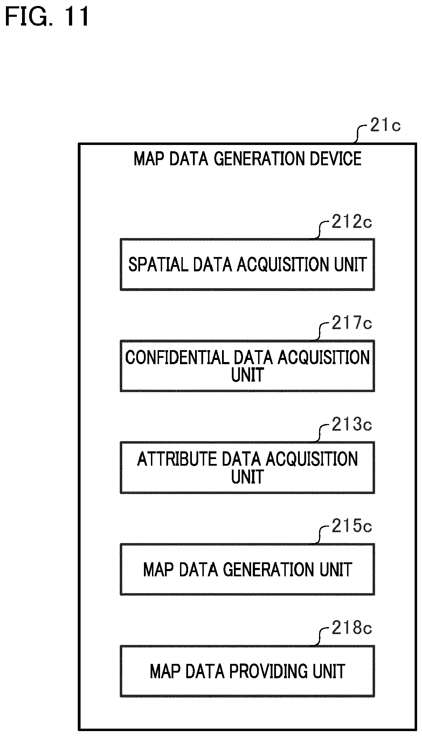

Next, a software constitution of a map data generation device according to Third Embodiment will be described with reference to Fig. 11.

Fig. 11 is a view showing an example of a software constitution of a map data generation device according to Third Embodiment. As shown in Fig. 11, a map data generation device 21C includes a spatial data acquisition unit 212C, a confidential data acquisition unit 217C, an attribute data acquisition unit 213C, a map data generation unit 215C, and a map data providing unit 218C.

The spatial data acquisition unit 212C acquires the spatial data generated by measuring an object present in the space R with a sensor. For example, the spatial data acquisition unit 212C stores a server managing the spatial data or the spatial data and acquires the spatial data from a storage medium installed in an arbitrary place, device, or the like.

For example, the said sensor is a two-dimensional or three-dimensional LIDAR or a stereo camera. In addition, the said sensor may be a sensor mounted in each of the movable apparatus 1-1 or so on to the movable apparatus 1-k which is newly introduced into the space R or may be a sensor of another movable apparatus which has already been introduced into the space R. Alternatively, the said sensor may be a sensor used by a worker who measures an object present in the space R.

For example, the spatial data is three-dimensional spatial data constituted of data including at least one of the three-dimensional point cloud data expressing an object present in the space R and structures such as walls and the ceiling of the building B, and the plane data including information of the shape and the orientation of the plane. In addition, the spatial data may be data obtained by mapping information related to the color of an object with the plane data.

Alternatively, the spatial data may be two-dimensional spatial data including at least one of the two-dimensional point cloud data from which an object present in the space R and the structures such as walls and the ceiling of the building B are cut out at a predetermined height in a three-dimensional space, and the line data including orientations of lines, positions of end points of lines, and the like.

In addition, the spatial data acquisition unit 212C may acquire the spatial data capable of generating the map data allowed to be used in common among at least two of the movable apparatus 1-1 and so on to the movable apparatus 1-k.

For example, the spatial data acquisition unit 212C may acquire the spatial data generated using one sensor. In this case, for example, it is preferable that the spatial data acquisition unit 212C acquire the spatial data generated using a sensor capable of measuring the distance to an object present in the space R with an accuracy as high as possible.

In addition, in this case, for example, it is preferable that the spatial data acquisition unit 212C acquire the spatial data generated using a sensor of which the range allowing measurement of the distance to an object present in the space R is as wide as possible.

Alternatively, the spatial data acquisition unit 212C may acquire the spatial data generated by processing a plurality of pieces of spatial data generated using each of a plurality of sensors into one piece of spatial data.

In this case, for example, it is preferable that the spatial data acquisition unit 212C acquire the spatial data generated by processing them into one piece of spatial data by enhancing contribution of the spatial data generated using a sensor capable of measuring the distance to an object present in the space R with an accuracy as high as possible.

The spatial data acquisition unit 212C may acquire the building data and the like attached to the spatial data together with the spatial data. For example, the building data is data identifying the building including the space R in which at least one of the movable apparatus 1-1 and so on to the movable apparatus 1-k carries out work while moving. In addition, the spatial data may be associated with at least one of the building data and the like attached to itself and saved in the memory 204.

The confidential data acquisition unit 217C acquires confidential data indicating information related to confidential information included in the spatial data. For example, the confidential data acquisition unit 217C stores a server managing the confidential data or the confidential data and acquires the confidential data from a storage medium installed in an arbitrary place, device, or the like.

For example, the confidential data indicates a position of the region including confidential information in at least one of the space R and the spatial data, identification information identifying the confidential information, classification information indicating the classification of the confidential information, and the access right necessary for access to the confidential information. In addition, the position of the region including confidential information is identified by a plurality of coordinates on the space R, for example, a two-dimensional or three-dimensional bounding box.

The attribute data acquisition unit 213C acquires the attribute data including contents related to the sensor mounted in the movable apparatus 1-1 autonomously moving in the space R and carrying out work such as cleaning, luggage transportation, and the like and contents related to the access right to the confidential information allowed to the movable apparatus 1-1.

Similarly, the attribute data acquisition unit 213C acquires the attribute data including contents related to the sensor mounted in the movable apparatus 1-k autonomously moving inside the space R and carrying out work such as cleaning, luggage transportation, and the like and contents related to the access right to the confidential information allowed to the movable apparatus 1-k.

The attribute data acquisition unit 213C may acquire the attribute data of the movable apparatus 1-1 from an apparatus or the like other than the movable apparatus 1-1. For example, the attribute data acquisition unit 213C may acquire the attribute data of the movable apparatus 1-1 input by a user who manages the movable apparatus 1-1.

Alternatively, the attribute data acquisition unit 213C may acquire the attribute data of the movable apparatus 1-1 by reading the code stuck on a surface of the building B or the movable apparatus 1-1. In addition, the attribute data acquisition unit 213C may also acquire the attribute data for each of the movable apparatus 1-2 and so on to the movable apparatus 1-k in a manner similar to that in the case of the movable apparatus 1-1.

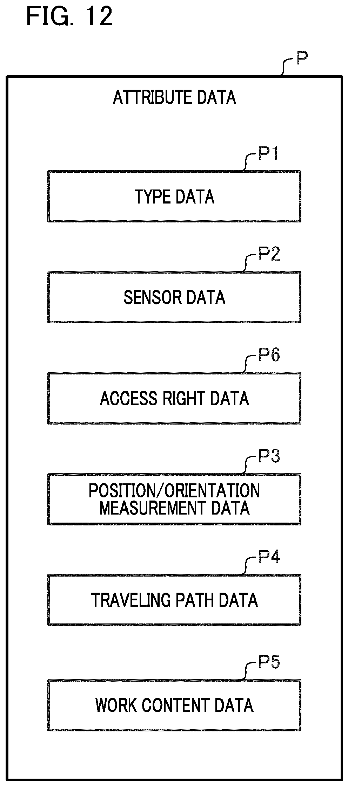

Fig. 12 is a view showing an example of the attribute data according to Third Embodiment. Fig. 12 shows the attribute data P. For example, as shown in Fig. 12, the attribute data P includes the type data P1, the sensor data P2, access right data P6, the position/orientation measurement data P3, the traveling path data P4, and the work content data P5.

In the following description related to Fig. 12, the movable apparatus 1-1 will be described as an example, but the same also applies to the movable apparatus 1-2 and so on to the movable apparatus 1-k.

The type data P1 indicates information related to at least one of the type, the specification, the function, and the like of the movable apparatus 1-1 which has been newly introduced into the space R. In addition, the type data P1 can also be used for management of the movable apparatus 1-1.

The sensor data P2 indicates contents related to the sensor described above. For example, the sensor data P2 indicates at least one of the kind of the sensor, the accuracy in the case in which the sensor measures the distance to an object present in the space, the range allowing the sensor to measure the distance to an object present in the space, and the position where the sensor is attached.

The access right data P6 indicates contents related to the access right to the confidential information described above. For example, the access right data P6 indicates contents related to at least one of the identification information identifying the confidential information allowing access of the movable apparatus 1-1, the classification information of the confidential information, and the confidentiality level of the confidential information.

The position/orientation measurement data P3 indicates a position and a orientation of itself to be taken by the movable apparatus 1-1 which is newly introduced into the space R inside the space R.

The traveling path data P4 indicates a path in which the movable apparatus 1-1 which is newly introduced into the space R travels inside the space R.

The work content data P5 indicates contents of work performed by the movable apparatus 1-1 which is newly introduced into the space R inside the space R.

The map data generation unit 215C generates the map data which is used when the movable apparatus 1-1 autonomously moves in the space R and does not allow the confidential information to be browsed on the basis of the spatial data, the confidential data, and the attribute data.

The map data generation unit 215C may generate the map data which does not allow the confidential information to be browsed if the access right indicated by the attribute data does not include the right of access to the confidential information.

For example, the map data generation unit 215C judges whether or not the identification information indicated by the access right data P6 included in the attribute data P and the identification information indicated by the confidential data coincide with each other. Further, if both do not coincide with each other, the map data generation unit 215C judges that the access right indicated by the attribute data does not include the right of access to the confidential information and generates the map data which does not allow the confidential information to be browsed.

Alternatively, the map data generation unit 215C judges whether or not the classification information indicated by the access right data P6 included in the attribute data P and the classification information indicated by the confidential data coincide with each other. Further, if it is judged that both do not coincide with each other, the map data generation unit 215C judges that the access right indicated by the attribute data does not include the right of access to the confidential information and generates the map data which does not allow the confidential information to be browsed.

Alternatively, the map data generation unit 215C judges whether or not the confidentiality level of the confidential information indicated by the access right data P6 included in the attribute data P is equal to or higher than the access right necessary for the access to the confidential information indicated by the confidential data.

Further, if it is judged that the level is lower than the access right, the map data generation unit 215C judges that the access right indicated by the attribute data does not include the right of access to the confidential information and generates the map data which does not allow the confidential information to be browsed.

For example, the map data generation unit 215C generates the map data by processing of deleting the confidential information from the spatial data, processing of performing mask processing with respect to the confidential information included in the spatial data, or processing of performing blurring processing with respect to the confidential information included in the spatial data.

The deleting processing described above is processing in which the confidential information is deleted from the spatial data such that the confidential information is not present in the spatial data. In addition, if the spatial data is three-dimensional point cloud data generated using a three-dimensional LIDAR, the deleting processing described above may be processing in which it is converted into two-dimensional point cloud data not including the confidential information.

In addition, if the spatial data includes an image including a set of feature points generated using a stereo camera and the confidential information, the deleting processing described above may be processing of deleting the image while the set of feature points is left.

The mask processing described above is processing in which the region displaying the confidential information is filled or an image or the like is superimposed on the region such that the confidential information included in the spatial data cannot be browsed. The blurring processing described above is processing in which the outline of the region displaying the confidential information, the boundary between two different colors, and the like are made indistinct such that the confidential information included in the spatial data cannot be browsed.

The map data generation unit 215C generates the map data by attaching authentication data, which indicates whether or not operation of measuring the confidential information with the sensor mounted in the movable apparatus 1-1 is allowed, to the spatial data in accordance with the access right.

Similarly, the map data generation unit 215C generates the map data by attaching authentication data, which indicates whether or not operation of measuring the confidential information with the sensor mounted in the movable apparatus 1-k is allowed, to the spatial data in accordance with the access right.

For example, these pieces of authentication data stipulate whether or not to allow the movable apparatus 1-1 and the like to enter the region in which the confidential information is present in the space R, and whether or not to allow operation of the movable apparatus 1-1 and the like measuring the confidential information present in the space R with the sensor.

The movable apparatus 1-1 autonomously moves inside the space R in accordance with the contents stipulated by the authentication data and carries out work. Similarly, the movable apparatus 1-k autonomously moves inside the space R in accordance with the contents stipulated by the authentication data and carries out work.

In addition, if the map data used by the movable apparatus 1-1 is generated, it is preferable that the map data generation unit 215C generate the map data having the quantity of data, the density of data, and the like which are neither excessive nor deficient when the movable apparatus 1-1 autonomously moves inside the space R.

Similarly, if the map data used by the movable apparatus 1-k is generated, it is preferable that the map data generation unit 215C generate the map data having the quantity of data, the density of data, and the like which are neither excessive nor deficient when the movable apparatus 1-k autonomously moves inside the space R.

In addition, the said quantity of data has a positive correlation with the number of points included in the point cloud data, the number of feature points used for ascertaining the space R, and the like. In addition, the said density of data has a positive correlation with the density of points included in the point cloud data, the density of feature points used for ascertaining the space R, and the like.

The map data providing unit 218C transmits the map data generated on the basis of the spatial data, the confidential data, and the attribute data of the movable apparatus 1-1 to the movable apparatus 1-1. Similarly, the map data providing unit 218C transmits the map data generated on the basis of the spatial data, the confidential data, and the attribute data of the movable apparatus 1-k to the movable apparatus 1-k.

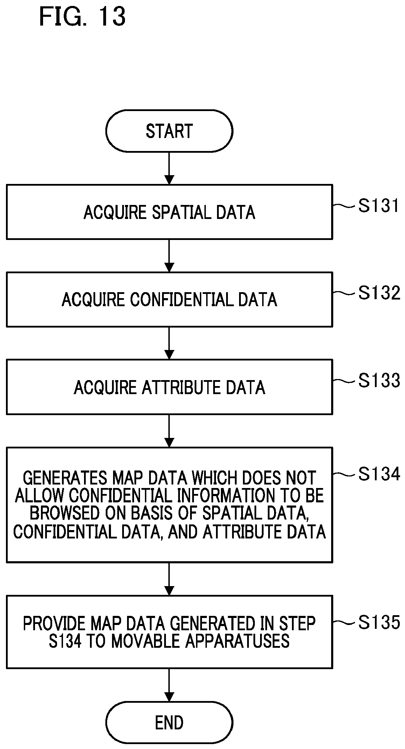

Next, with reference to Fig. 13, an example of processing executed by the map data generation device 21C will be described. Fig. 13 is a flowchart showing an example of processing executed by the map data generation device according to Third Embodiment.

In Step S131, the spatial data acquisition unit 212C acquires the spatial data. In Step S132, the confidential data acquisition unit 217C acquires the confidential data. In Step S133, the attribute data acquisition unit 213C acquires the attribute data.

In Step S134, the map data generation unit 215C generates the map data which does not allow the confidential information to be browsed on the basis of the spatial data, the confidential data, and the attribute data. In Step S135, the map data providing unit 218C provides the map data generated in Step S134 to the movable apparatuses.

<Fourth Embodiment>

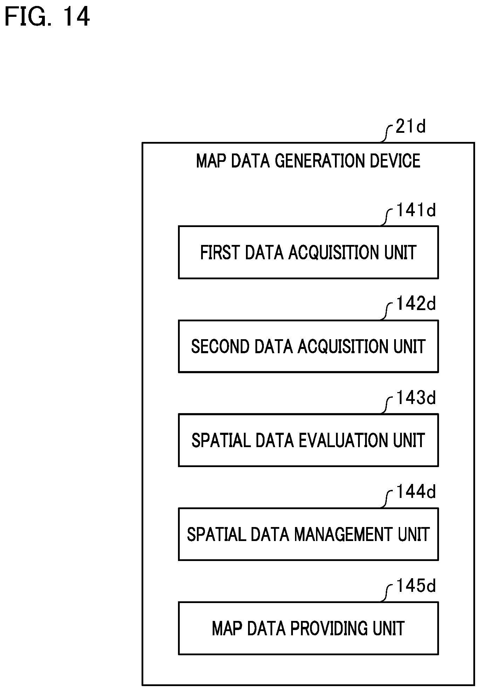

Next, a software constitution of a map data generation device according to Fourth Embodiment will be described with reference to Fig. 14. Fig. 14 is a view showing an example of a software constitution of a map data generation device 21d according to Fourth Embodiment. As shown in Fig. 14, the map data generation device 21d includes a first data acquisition unit 141d, a second data acquisition unit 142d, a spatial data evaluation unit 143d, a spatial data management unit 144d, and a map data providing unit 145d.

The first data acquisition unit 141d acquires first spatial data generated by measuring an object present in the space R with a first sensor mounted in a first movable apparatus. In addition, the first data acquisition unit 141d acquires first attribute data indicating the attribute of the first movable apparatus.

The first data acquisition unit 141d may acquire the first attribute data indicating contents related to the first sensor. For example, the first data acquisition unit 141d acquires the first spatial data and the first attribute data from the memory 204. In addition, the first attribute data is associated with the first spatial data generated using the first sensor mounted in the first movable apparatus in which the attribute is indicated by the first attribute data.

The second data acquisition unit 142d acquires second attribute data indicating the attribute of a second movable apparatus which is different from the first movable apparatus and in which a second sensor is mounted. The second data acquisition unit 142d may acquire the second attribute data indicating contents related to the second sensor.

For example, the second data acquisition unit 142d acquires the second attribute data from the memory 204. In addition, the second attribute data is associated with second spatial data generated using the second sensor mounted in the second movable apparatus in which the attribute is indicated by the second attribute data.

For example, the first attribute data and the second attribute data include sensor data, type data, the position/orientation data, traveling path data, and work content data.

The sensor data indicates contents related to the sensor mounted in a movable apparatus. For example, the sensor data may indicate a kind of the sensor. The sensor data is an error occurring when the sensor measures the distance to an object present in the space and may indicate a sensor accuracy in units of length.

In addition, regarding the sensor accuracy, the smaller value thereof indicates a smaller error occurring when the sensor measures the distance to an object present in the space, and the larger value thereof indicates a larger error occurring when the sensor measures the distance to an object present in the space.

The sensor data is spatial fineness used when the sensor measures the distance to an object present in the space and may indicate a sensor resolution in units of length. In addition, regarding the sensor resolution, the smaller value thereof indicates that the distance to an object can be measured in fine units, and the larger value thereof indicates that the distance to an object can be measured only in coarse units.

The sensor data is a range of the distance allowing the sensor to measure the distance to an object present in the space and may indicate a sensor measurement distance in units of length. The sensor data is a range of the angle allowing the sensor to measure the distance to an object present in the space and may indicate a sensor viewing angle in units of angle.

In addition, the sensor viewing angle may be subdivided into the sensor viewing angle in the horizontal direction and the sensor viewing angle in the vertical direction. The sensor data may indicate a sensor attachment position which is a position where the sensor is attached. In addition, for example, the sensor attachment position indicates a position where the sensor is attached as coordinates in a three-dimensional coordinate system having an X axis, a Y axis, and a Z axis.

The type data indicates information related to at least one of the type, the specification, the function, and the like of a movable apparatus. In addition, the type data can also be used for management of the movable apparatus. The position/orientation data indicates at least one of the position and the orientation of the movable apparatus to be taken by the movable apparatus inside the space R. The traveling path data indicates a path in which the movable apparatus travels inside the space R. The work content data indicates contents of work performed by the movable apparatus inside the space R.

The spatial data evaluation unit 143d evaluates the validity of the first spatial data as the map data which is used when the second movable apparatus autonomously moves in the space R on the basis of the first attribute data and the second attribute data.

For example, the spatial data evaluation unit 143d may evaluate the validity of the first spatial data as the map data on the basis of the difference between the contents indicated by the first attribute data and the contents indicated by the second attribute data. More specifically, the spatial data evaluation unit 143d may evaluate the validity of the first spatial data as the map data on the basis of the contents related to first sensor and the contents related to the second sensor.

For example, the said contents related to first sensor include, as items, the first sensor resolution, the first sensor measurement distance, the first sensor viewing angle, and the first sensor attachment position. The first sensor resolution is spatial fineness used when the first sensor measures the distance to an object present in the space.

The first sensor measurement distance indicates a range of the distance allowing the first sensor to measure an object. The first sensor viewing angle indicates a range of the angle allowing the first sensor to measure an object.

The first sensor attachment position indicates a position where the first sensor is attached to the first movable apparatus. The contents related to first sensor may include, as items, the first sensor accuracy which is an accuracy of the distance allowing the first sensor to perform measurement, the kind of the first sensor, and the first sensor operation environment which is an environment allowing the first sensor to operate.

Similarly, for example, the said contents related to the second sensor include, as items, the second sensor resolution, the second sensor measurement distance, the second sensor viewing angle, and the second sensor attachment position. The second sensor resolution is spatial fineness used when the second sensor measures the distance to an object present in the space.

The second sensor measurement distance indicates a range of the distance allowing the second sensor to measure an object. The second sensor viewing angle indicates a range of the angle allowing the second sensor to measure an object.

The second sensor attachment position indicates a position where the second sensor is attached to the second movable apparatus. The contents related to the second sensor may include, as items, the second sensor accuracy which is an accuracy of the distance allowing the second sensor to perform measurement, the kind of the second sensor, and the second sensor operation environment which is an environment allowing the second sensor to operate.

Next, the spatial data evaluation unit 143d calculates the difference between the first sensor and the second sensor regarding four items, such as the sensor resolution, the sensor measurement distance, the sensor viewing angle, and the sensor attachment position.

Specifically, the spatial data evaluation unit 143d calculates a difference $\Delta R$ between a first sensor resolution $M_R$ and a second sensor resolution $T_R$ using the following Expression (1). The difference $\Delta R$ indicates, in the case of a positive value, that the sensor resolution of the second sensor is lower than that of the first sensor and indicates, in the case of a negative value, that the sensor resolution of the second sensor is higher than that of the first sensor.

$$\Delta R = T_R - M_R \ ... \ \text{Expression (1)}$$

The spatial data evaluation unit 143d calculates a difference $\Delta d$ between a first sensor measurement distance $M_d$ and a second sensor measurement distance $T_d$ using the following Expression (2). The difference $\Delta d$ indicates, in the case of a positive value, that the sensor measurement distance of the second sensor is longer than that of the first sensor and indicates, in the case of a negative value, that the sensor measurement distance of the second sensor is shorter than that of the first sensor.

$$\Delta d = T_d - M_d \ ... \ \text{Expression (2)}$$

The spatial data evaluation unit 143d calculates a difference $\Delta f$ between a first sensor viewing angle $M_f$ and a second sensor viewing angle $T_f$ regarding each of the horizontal direction and the vertical direction using the following Expression (3). The difference $\Delta f$ indicates, in the case of a positive value, that the sensor viewing angle of the second sensor is wider than that of the first sensor and indicates, in the case of a negative value, that the sensor viewing angle of the second sensor is narrower than that of the first sensor.

In addition, in the following description, the difference $\Delta f$ in the horizontal direction will be described as the difference $\Delta f$ (horizontal), and the difference $\Delta f$ in the vertical direction will be described as the difference $\Delta f$ (vertical).

$$\Delta f = T_f - M_f \ ... \ \text{Expression (3)}$$

The spatial data evaluation unit 143d calculates a difference $\Delta s$ between a first sensor attachment position $M_s$ and a second sensor attachment position $T_s$ regarding each of the X axis direction, the Y axis direction, and the Z axis direction using the following Expression (4). It is preferable that the difference $\Delta s$ be small as much as possible.

In addition, in the following description, the difference $\Delta s$ in the X axis direction will be described as the difference $\Delta s$ (X), the difference $\Delta s$ in the Y axis direction will be described as the difference $\Delta s$ (Y), and the difference $\Delta s$ in the Z axis direction will be described as the difference $\Delta s$ (Z).

$$\Delta s = T_s - M_s \ ... \ \text{Expression (4)}$$

Next, the spatial data evaluation unit 143d judges whether or not predetermined requirements are satisfied regarding each of the difference $\Delta R$, the difference $\Delta d$, the difference $\Delta f$, and the difference $\Delta s$. Further, the spatial data evaluation unit 143d increases or decreases the evaluation value related to the validity of first map data as the map data in accordance with the judged results. In addition, the said evaluation value is a final evaluation value set in consideration of four items, such as the sensor resolution, the sensor measurement distance, the sensor viewing angle, and the sensor attachment position.

For example, since it is preferable that the sensor resolution of the second sensor be high, the predetermined requirement of the spatial data evaluation unit 143d is that the difference $\Delta R$ has a negative value. Further, if it is judged that the difference $\Delta R$ has a negative value, the spatial data evaluation unit 143d increases the evaluation value related to the validity of the first map data as the map data.

On the other hand, if it is judged that the difference $\Delta R$ does not have a negative value, the spatial data evaluation unit 143d decreases the evaluation value related to the validity of the first map data as the map data.

In addition, for example, since it is preferable that the sensor measurement range of the second sensor be long, the predetermined requirement of the spatial data evaluation unit 143d is that the difference $\Delta d$ has a positive value. Further, if it is judged that the difference $\Delta d$ has a positive value, the spatial data evaluation unit 143d increases the evaluation value related to the validity of the first map data as the map data.

On the other hand, if it is judged that the difference Δd does not have a positive value, the spatial data evaluation unit 143d decreases the evaluation value related to the validity of the first map data as the map data.

In addition, for example, since it is preferable that the sensor viewing angle of the second sensor be wide, the predetermined requirement of the spatial data evaluation unit 143d is that the difference Δf (horizontal) and the difference Δf (vertical) have a positive value.

Further, if it is judged that the difference Δf (horizontal) and the difference Δf (vertical) have a positive value, the spatial data evaluation unit 143d increases the evaluation value related to the validity of the first map data as the map data. On the other hand, if it is judged that at least one of the difference Δf (horizontal) and the difference Δf (vertical) does not have a positive value, the spatial data evaluation unit 143d decreases the evaluation value related to the validity of the first map data as the map data.

In addition, for example, since it is preferable that the sensor attachment position of the second sensor be as close as possible to the sensor attachment position of the first sensor, the predetermined requirement of the spatial data evaluation unit 143d is that each of the difference Δs (X), the difference Δs (Y), and the difference Δs (Z) is equal to or smaller than a predetermined threshold.

The said predetermined threshold may be independently determined regarding each of the X axis direction, the Y axis direction, and the Z axis direction. Further, if it is judged that each of the difference Δs (X), the difference Δs (Y), and the difference Δs (Z) is equal to or smaller than the predetermined threshold, the spatial data evaluation unit 143d increases the evaluation value related to the validity of the first map data as the map data.

On the other hand, if it is judged that at least one of the difference Δs (X), the difference Δs (Y), and the difference Δs (Z) exceeds the predetermined threshold, the spatial data evaluation unit 143d decreases the evaluation value related to the validity of the first map data as the map data.

The spatial data evaluation unit 143d may calculate the difference between the first sensor and the second sensor regarding the items other than the sensor resolution, the sensor measurement distance, the sensor viewing angle, and the sensor attachment position and may increase or decrease the evaluation value.

For example, the spatial data evaluation unit 143d may calculate the difference between the first sensor and the second sensor regarding the sensor accuracy and may increase or decrease the evaluation value. In this case, the spatial data evaluation unit 143d executes processing similar to the processing related to the sensor accuracy regarding the sensor resolution.

In addition, the spatial data evaluation unit 143d may adjust at least one of the increased amount and the decreased amount of the evaluation value described above in accordance with the importance of each item, the degree of satisfaction of the predetermined requirements for each item, or the like.

In addition, the spatial data evaluation unit 143d need only execute the processing described above regarding at least one item. However, it is preferable that the spatial data evaluation unit 143d execute the processing described above regarding a plurality of items. That is, it is preferable that the spatial data evaluation unit 143d evaluate the validity of the first spatial data as the map data based on at least two items.

In addition, an example in which the spatial data evaluation unit 143d calculates the final evaluation value described above by increasing or decreasing the final evaluation value depending on whether or not the difference for each item satisfies the predetermined requirements has been described, but the present invention is not limited to this.

For example, the spatial data evaluation unit 143d may calculate the final evaluation value by calculating the evaluation value for each item and calculating the sum of the evaluation values obtained by multiplying the evaluation values by the weight. The spatial data evaluation unit 143d arbitrarily determines the weight thereof in accordance with the importance of the items.

However, it is preferable that the spatial data evaluation unit 143d determine each weight so as not to be excessively biased to a particular item. Accordingly, the spatial data evaluation unit 143d can calculate a more appropriate evaluation value in consideration of a plurality of items appropriately.

Further, the spatial data evaluation unit 143d evaluates the validity of the first spatial data as the map data and then generates evaluation data indicating evaluation results of the validity of the first spatial data as the map data. For example, the evaluation data indicates the final evaluation value described above and may indicate items taken into consideration when the evaluation value is calculated.

If it is judged that the predetermined requirements described above are not satisfied regarding at least one of the difference ΔR, the difference Δd, the difference Δf, and the difference Δs, the spatial data management unit 144d stores the first spatial data in the storage medium.

For example, if it is judged that the difference ΔR does not satisfy the predetermined requirements described above, the spatial data management unit 144d stores the first spatial data in the storage medium. In addition, for example, if it is judged that the difference Δd does not satisfy the predetermined requirements described above, the spatial data management unit 144d stores the first spatial data in the storage medium.

In addition, regarding these, the same also applies to the difference Δf, the difference Δs, and other differences. This storage medium may be included in the information processing device 2a or the map data generation device 21d or may not be included in the information processing device 2a and the map data generation device 21d.

The map data providing unit 145d judges whether or not the contents indicated by the evaluation data satisfy the requirements necessary for the second movable apparatus. For example, the said requirements necessary for the second movable apparatus are that the final evaluation value which has been calculated in consideration of four items, such as the sensor resolution, the sensor measurement distance, the sensor viewing angle, and the sensor attachment position is equal to or larger than the predetermined threshold.

Further, if it is judged that the contents indicated by the evaluation data satisfy the requirements necessary for the second movable apparatus, the map data providing unit 145d provides the first spatial data to the second movable apparatus as the map data.

The second data acquisition unit 142d may further acquire the second spatial data generated by measuring an object present in the space R with the second sensor when the second movable apparatus autonomously moves in the space R inside the building B.

In this case as well, the spatial data evaluation unit 143d evaluates the validity of the first spatial data as the map data on the basis of the difference between the contents indicated by the first attribute data and the contents indicated by the second attribute data.

In addition, in this case, the spatial data evaluation unit 143d may judge whether or not the difference satisfies the predetermined requirements described above. Further, if it is judged that the difference satisfies the predetermined requirements, the spatial data management unit 144d stores one of the first spatial data and the second spatial data which further satisfies the predetermined requirements described above in the storage medium.

This storage medium may be included in the information processing device 2a or the map data generation device 21d or may not be included in the information processing device 2a and the map data generation device 21d.

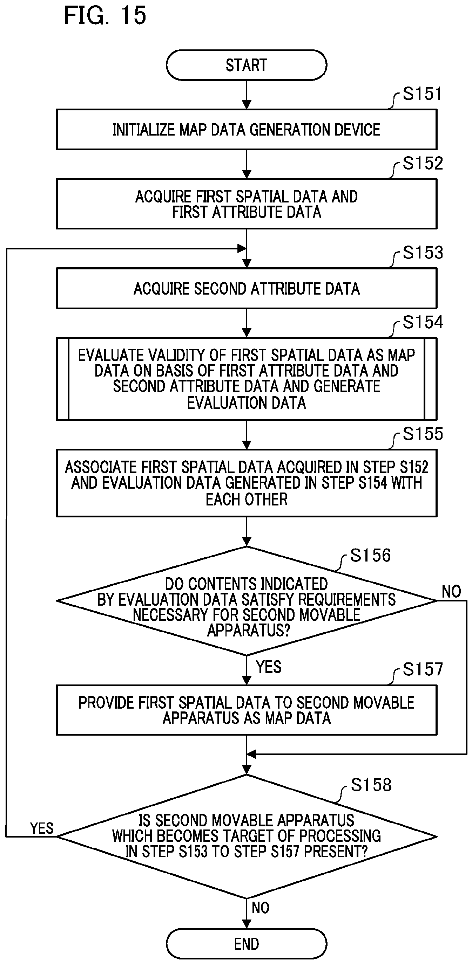

Next, with reference to Fig. 15, an example of processing executed by the map data generation device 21d will be described. Fig. 15 is a flowchart showing an example of processing executed by the map data generation device 21d according to Fourth Embodiment.

In Step S151, the map data generation device 21d is initialized. For example, the said initialization includes processing of reading a program, processing of causing the map data generation device 21d to be in an operable state, and processing of setting requirements used when the validity of the first spatial data as the map data is evaluated.

In Step S152, the first data acquisition unit 141d acquires the first spatial data and the first attribute data. In Step S153, the second data acquisition unit 142d acquires the second attribute data.

In Step S154, the spatial data evaluation unit 143d evaluates the validity of the first spatial data as the map data on the basis of the first attribute data and the second attribute data and generates the evaluation data. In Step S155, the spatial data evaluation unit 143d associates the first spatial data acquired in Step S152 and the evaluation data generated in Step S154 with each other.

In Step S156, the spatial data evaluation unit 143d judges whether or not the contents indicated by the evaluation data satisfy the requirements necessary for the second movable apparatus. If it is judged that the contents indicated by the evaluation data satisfy the requirements necessary for the second movable apparatus (Step S156: YES), the spatial data evaluation unit 143d proceeds the processing to Step S157.

On the other hand, if it is judged that the contents indicated by the evaluation data do not satisfy the requirements necessary for the second movable apparatus (Step S156: NO), the spatial data evaluation unit 143d proceeds the processing to Step S158.

In Step S157, the map data providing unit 145d provides the first spatial data to the second movable apparatus as the map data.

In Step S158, the map data generation device 21d judges whether or not a second movable apparatus which becomes a target of the processing in Step S153 to Step S157 is present. If it is judged that a second movable apparatus which becomes a target of the processing in Step S153 to Step S157 is present (Step S158: YES), the map data generation device 21d returns the processing to Step S153.

On the other hand, if it is judged that a second movable apparatus which becomes a target of the processing in Step S153 to Step S157 is not present (Step S158: NO), the map data generation device 21d ends the processing.

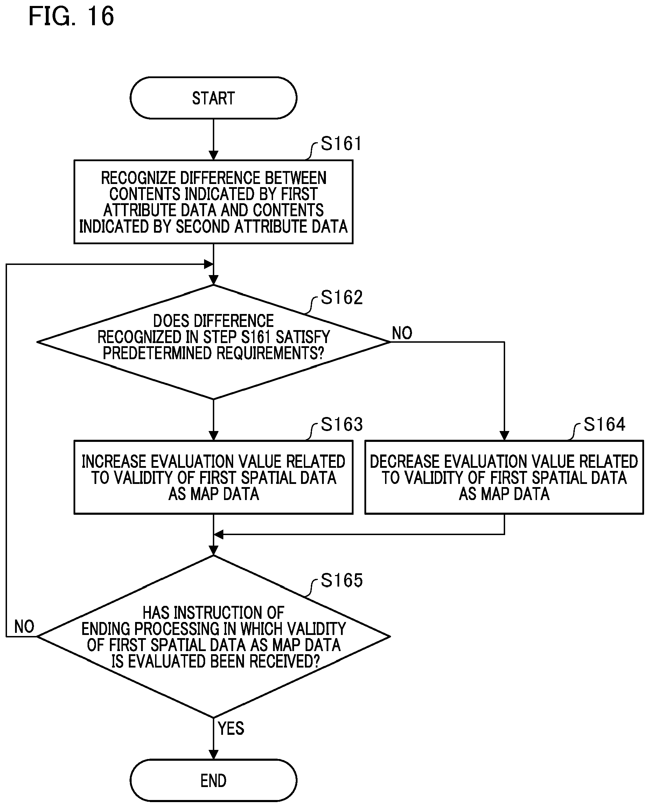

Next, with reference to Fig. 16, an example of processing in which the map data generation device 21d evaluates the validity of the first spatial data as the map data will be described. Fig. 16 is a flowchart showing an example of processing in which the map data generation device 21d according to Fourth Embodiment evaluates validity of first spatial data as map data.

In Step S161, the spatial data evaluation unit 143d recognizes the difference between the contents indicated by the first attribute data and the contents indicated by the second attribute data.

In Step S162, the spatial data evaluation unit 143d judges whether or not the difference recognized in Step S161 satisfies the predetermined requirements. If it is judged that the difference recognized in Step S161 satisfies the predetermined requirements (Step S162: YES), the spatial data evaluation unit 143d proceeds the processing to Step S163.

On the other hand, if it is judged that the difference recognized in Step S161 does not satisfy the predetermined requirements (Step S162: NO), the spatial data evaluation unit 143d proceeds the processing to Step S164.

In Step S163, the spatial data evaluation unit 143d increases the evaluation value related to the validity of the first spatial data as the map data. In Step S164, the spatial data evaluation unit 143d decreases the evaluation value related to the validity of the first spatial data as the map data.

In Step S165, the spatial data evaluation unit 143d judges whether or not an instruction of ending the processing in which the validity of the first spatial data as the map data is evaluated has been received. If it is judged that an instruction of ending the processing in which the validity of the first spatial data as the map data is evaluated has been received (Step S165: YES), the spatial data evaluation unit 143d ends the processing.

On the other hand, if it is judged that an instruction of ending the processing in which the validity of the first spatial data as the map data is evaluated has not been received (Step S165: NO), the spatial data evaluation unit 143d returns the processing to Step S162. In addition, the map data generation device 21d may execute processing of deleting the spatial data saved in the storage medium or keeping it stored.

The spatial data evaluation unit 143d judges whether or not the validity of the first spatial data as the map data satisfies the predetermined requirements. For example, the spatial data evaluation unit 143d judges whether or not the number of times of providing the first spatial data to a plurality of movable apparatuses as the map data or a value having a positive correlation with the number of times is equal to or larger than the predetermined threshold.

Regarding the number of times and the value, the larger value thereof indicates that the first spatial data has high versatility as the map data, and the smaller value thereof indicates that the first spatial data has low versatility as the map data. In addition, the number of times and the value may be validity evaluated on the basis of the first attribute data and the second attribute data and may be validity evaluated on the basis of the attribute data of another movable apparatus other than the first attribute data and the second attribute data.

In addition, for example, the spatial data evaluation unit 143d judges whether or not the evaluation value which is an index of the validity of the first spatial data as the map data is equal to or larger than the predetermined threshold.

Further, if it is judged that the validity of the first spatial data as the map data satisfies the predetermined requirements, the spatial data management unit 144d keeps the first spatial data stored in the storage medium.

For example, if it is judged that the number of times of providing the first spatial data to a movable apparatus as the map data or a value having a positive correlation with the number of times is equal to or larger than the predetermined threshold, the spatial data management unit 144d keeps the first spatial data stored in the storage medium. In addition, for example, if it is judged that the evaluation value which is an index of the validity of the first spatial data as the map data is equal to or larger than the predetermined threshold, the spatial data management unit 144d keeps the first spatial data stored in the storage medium.

On the other hand, if it is judged that the validity of the first spatial data as the map data does not satisfy the predetermined requirements, the spatial data management unit 144d deletes the first spatial data from the storage medium. For example, if it is judged that the number of times of providing the first spatial data to a movable apparatus as the map data or a value having a positive correlation with the number of times is smaller than the predetermined threshold, the spatial data management unit 144d deletes the first spatial data from the storage medium.

In addition, for example, if it is judged that the evaluation value which is an index of the validity of the first spatial data as the map data is smaller than the predetermined threshold, the spatial data management unit 144d deletes the first spatial data from the storage medium.

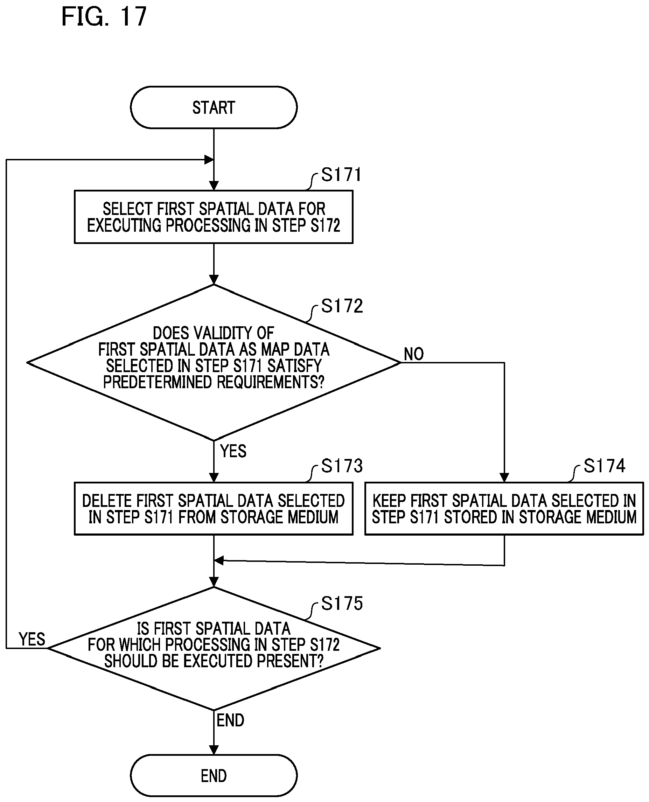

Next, with reference to Fig. 17, an example of processing in which the map data generation device 21d manages the spatial data stored in the storage medium will be described. Fig. 17 is a flowchart showing an example of processing in which the map data generation device 21d according to Fourth Embodiment manages spatial data stored in a storage medium. In addition, the processing shown in Fig. 17 is processing to be performed on the premise that the processing in which the validity of the first spatial data as the map data is evaluated is completed.

In Step S171, the spatial data evaluation unit 143d selects the first spatial data for executing the processing in Step S172.

In Step S172, the spatial data evaluation unit 143d judges whether or not the validity of the first spatial data as the map data selected in Step S171 satisfies the predetermined requirements. If it is judged that the validity of the first spatial data as the map data selected in Step S171 satisfies the predetermined requirements (Step S172: YES), the spatial data evaluation unit 143d proceeds the processing to Step S173.

On the other hand, if it is judged that the validity of the first spatial data as the map data selected in Step S171 does not satisfy the predetermined requirements (Step S172: NO), the spatial data evaluation unit 143d proceeds the processing to Step S174.

In Step S173, the spatial data management unit 144d deletes the first spatial data selected in Step S171 from the storage medium. In Step S174, the spatial data management unit 144d keeps the first spatial data selected in Step S171 stored in the storage medium.

In Step S175, the spatial data evaluation unit 143d judges whether or not the first spatial data for which the processing in Step S172 should be executed is present. If it is judged that the first spatial data for which the processing in Step S172 should be executed is present (Step S175: YES), the spatial data evaluation unit 143d returns the processing to Step S171.

On the other hand, if it is judged that the first spatial data for which the processing in Step S172 should be executed is not present (Step S175: NO), the spatial data evaluation unit 143d ends the processing. In addition, the map data generation device 21d may execute processing of storing the second spatial data in the storage medium.

The second data acquisition unit 142d further acquires the second spatial data generated by measuring an object present in the space R with the second sensor when the second movable apparatus autonomously moves in the space R inside the building B.

The spatial data evaluation unit 143d evaluates the validity of the second spatial data as the map data and generates the evaluation data indicating evaluation results of the validity of the second spatial data. Similar to the method for generating the evaluation data related to the first spatial data, the spatial data evaluation unit 143d generates the evaluation data related to the second spatial data by performing evaluation on the basis of the second attribute data, the first attribute data, or the attribute data of other movable apparatuses.

Further, the spatial data evaluation unit 143d judges whether or not the validity of the second spatial data as the map data satisfies the predetermined requirements. For example, the spatial data evaluation unit 143d judges whether or not the evaluation value which is an index of the validity of the second spatial data as the map data is equal to or larger than the predetermined threshold.

If it is judged that the validity of the second spatial data as the map data satisfies the predetermined requirements, the spatial data management unit 144d stores the second spatial data in the storage medium. For example, if it is judged that the evaluation value which is an index of the validity of the second spatial data as the map data is equal to or larger than the predetermined threshold, the spatial data management unit 144d stores the second spatial data in the storage medium.

In Fourth Embodiment described above, a case in which if it is judged that the validity of the first spatial data as the map data does not satisfy the predetermined requirements, the first spatial data is deleted from the storage medium has been described as an example, but the present invention is not limited to this.

For example, if it is judged that the validity of the first spatial data as the map data does not satisfy the predetermined requirements, the spatial data management unit 144d may cause the display device 24 or the like to display a user interface entrusting a user with a process of selecting whether or not to delete the first spatial data from the storage medium. Further, if an instruction of deleting the first spatial data from the storage medium is received, the spatial data management unit 144d may delete the first spatial data from the storage medium.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions. In addition, the present invention also includes combinations of a plurality of embodiments described above.

In addition, as a part or the whole of the control according to the embodiments, a computer program realizing the function of the embodiments described above may be supplied to the map data generation device and the like through a network or various storage media. Then, a computer (or a CPU, an MPU, or the like) of the map data generation device and the like may be configured to read and execute the program. In such a case, the program and the storage medium storing the program configure the present invention.

Alternatively, for example, the present invention includes those realized using at least one processor or circuit configured to function of the embodiments explained above. A plurality of processors may be used for distributed processing.

This application claims the benefit of Japanese Patent Application No. 2022-182433, filed on November 15, 2022, Japanese Patent Application No. 2022-198569, filed on December 13, 2022, and Japanese Patent Application No. 2022-198427 filed on December 13, 2022, all of which are hereby incorporated by reference herein in its entirety.

In order to provide a map suitable for a movable apparatus which autonomously moves, a map data generation device includes a spatial data acquisition unit configured to acquire spatial data generated by measuring an object present in a space with a sensor, an attribute data acquisition unit configured to acquire attribute data indicating an attribute of a movable apparatus which autonomously moves in the space, and a map data generation unit configured to generate map data which is used when the movable apparatus autonomously moves in the space on the basis of the attribute data and the spatial data.

**Claims**

1. A map data generation device comprising:
   at least one processor or circuit configured to function as:

   a spatial data acquisition unit configured to acquire spatial data generated by measuring an object present in a space with a sensor;
   an attribute data acquisition unit configured to acquire attribute data indicating an attribute of a movable apparatus which autonomously moves in the space; and

a map data generation unit configured to generate map data which is used when the movable apparatus autonomously moves in the space on the basis of the attribute data and the spatial data.

2. The map data generation device according to claim 1,
wherein the at least one processor or circuit is further configured to function as:
a spatial data generation unit configured to generate the spatial data by measuring an object present in the space with the sensor.

3. The map data generation device according to claim 2,
wherein the spatial data generation unit generates the spatial data capable of generating the map data allowed to be used in common among a plurality of the movable apparatuses.

4. The map data generation device according to claim 2,

wherein the spatial data generation unit generates a plurality of pieces of the spatial data for each of the movable apparatuses,
wherein the spatial data acquisition unit acquires a plurality of pieces of the spatial data for each of the movable apparatuses,
wherein the attribute data acquisition unit acquires the attribute data for each of the movable apparatuses, and
wherein the map data generation unit generates the map data for each of the movable apparatuses using the spatial data selected from a plurality of pieces of the spatial data generated for each of the movable apparatuses.

5. The map data generation device according to claim 4,

wherein the at least one processor or circuit is further configured to function as:
a similarity calculation unit configured to calculate a similarity indicating a degree of similarity of the movable apparatus with respect to other movable apparatuses, and
wherein the map data generation unit generates the map data on the basis of the spatial data selected on the basis of the similarity.

6. The map data generation device according to claim 1,
wherein the attribute data acquisition unit acquires the attribute data indicating at least one of information related to a type of the movable apparatus, a kind of the sensor, accuracy in a case in which the sensor measures an object present in the space, a range allowing the sensor to measure an object present in the space, and a position where the sensor is attached.

7. The map data generation device according to claim 2,
wherein the map data generation unit generates the map data related to a range allowing the sensor mounted in the movable apparatus to measure an object present in the space.

8. The map data generation device according to claim 2,
wherein the map data generation unit generates the map data related to a range not allowing the sensor mounted in the movable apparatus to measure an object present in the space.

9. The map data generation device according to claim 1,

wherein the map data generation unit updates the map data on the basis of the attribute data and the spatial data, and
wherein the at least one processor or circuit is further configured to function as:

a notification necessity judgment unit configured to judge whether or not there is a need to notify the movable apparatus of the fact that the map data has been updated; and
an updating notification unit configured to notify the movable apparatus of the fact that the map data has been updated if it is judged that there is a need to notify the movable apparatus of the fact that the map data has been updated.

10. The map data generation device according to claim 2,
wherein the map data generation unit generates new map data by converting the map data.

11. A non-transitory computer-readable storage medium configured to store a computer program comprising instructions for executing following processes:

acquiring spatial data generated by measuring an object present in a space with a sensor;
acquiring attribute data indicating an attribute of a movable apparatus which autonomously moves in the space; and
generating map data which is used when the movable apparatus autonomously moves in the space on the basis of the attribute data and the spatial data.

12. A map data generation method comprising:

acquiring spatial data generated by measuring an object present in a space with a sensor;
acquiring attribute data indicating an attribute of a movable apparatus which autonomously moves in the space; and
generating map data which is used when the movable apparatus autonomously moves in the space on the basis of the attribute data and the spatial data.

13. A map data generation device comprising:
at least one processor or circuit configured to function as:

a spatial data acquisition unit configured to acquire spatial data generated by measuring an object present in a space with a sensor;
a confidential data acquisition unit configured to acquire confidential data indicating contents related to confidential information included in the spatial data;
an attribute data acquisition unit configured to acquire attribute data indicating contents related to a sensor mounted in a movable apparatus which autonomously moves in the space and contents related to an access right to the confidential information allowed to the movable apparatus; and
a map data generation unit configured to generate map data which is used when the movable apparatus autonomously moves in the space and does not allow the confidential information to be browsed on the basis of the spatial data, the confidential data, and the attribute data.

14. The map data generation device according to claim 13,
wherein the map data generation unit generates the map data if the access right indicated by the attribute data does not include a right of access to the confidential information.

15. The map data generation device according to claim 13,
wherein the map data generation unit generates the map data by processing of deleting the confidential information from the spatial data, processing of performing mask processing with respect to the confidential information included in the spatial data, or processing of performing blurring processing with respect to the confidential information included in the spatial data.

16. The map data generation device according to claim 13,
wherein the map data generation unit generates the map data by attaching authentication data, which indicates whether or not operation of measuring the confidential information with a sensor mounted in the movable apparatus is allowed, to the spatial data in accordance with the access right.

17. A non-transitory computer-readable storage medium configured to store a computer program comprising instructions for executing following processes:

acquiring spatial data generated by measuring an object present in a space with a sensor;
acquiring confidential data indicating contents related to confidential information included in the spatial data;
acquiring attribute data indicating contents related to a sensor mounted in a movable apparatus which autonomously moves in the space and contents related to an access right to the confidential information allowed to the movable apparatus; and
generating map data which is used when the movable apparatus autonomously moves in the space and does not allow the confidential information to be browsed on the basis of the spatial data, the confidential data, and the attribute data.

18. A map data generation method comprising:

acquiring spatial data generated by measuring an object present in a space with a sensor;
acquiring confidential data indicating contents related to confidential information included in the spatial data;
acquiring attribute data indicating contents related to a sensor mounted in a movable apparatus which autonomously moves in the space and contents related to an access right to the confidential information allowed to the movable apparatus; and
generating map data which is used when the movable apparatus autonomously moves in the space and does not allow the confidential information to be browsed on the basis of the spatial data, the confidential data, and the attribute data.

19. A map data generation device comprising:

a first data acquisition unit configured to acquire first spatial data generated by measuring an object present in a space with a first sensor mounted in a first movable apparatus, and first attribute data indicating an attribute of the first movable apparatus;
a second data acquisition unit configured to acquire second attribute data indicating an attribute of a second movable apparatus which is different from the first movable apparatus and in which a second sensor is mounted; a spatial data evaluation unit configured to evaluate validity of the first spatial data as map data which is used when the second movable apparatus autonomously moves in the space on the basis of the first attribute data and the second attribute data, and generate evaluation data indicating evaluation results of the validity of the first spatial data; and a map data providing unit configured to provide the first spatial data as the map data to the second movable apparatus if contents indicated by the evaluation data satisfy requirements necessary for the second movable apparatus.

20. The map data generation device according to claim 19, wherein the spatial data evaluation unit evaluates the validity of the first spatial data as the map data on the basis of a difference between contents indicated by the first attribute data and contents indicated by the second attribute data.

21. The map data generation device according to claim 20,

wherein the spatial data evaluation unit judges whether or not the difference satisfies predetermined requirements, and wherein the at least one processor or circuit is further configured to function as: a spatial data management unit configured to store the first spatial data in a storage medium if it is judged that the difference does not satisfy the predetermined requirements.

22. The map data generation device according to claim 20,

wherein the second data acquisition unit further acquires second spatial data generated by measuring an object present in the space with the second sensor when the second movable apparatus autonomously moves in the space, wherein the spatial data evaluation unit judges whether or not the difference satisfies predetermined requirements, and wherein the at least one processor or circuit is further configured to function as: a spatial data management unit configured to store one of the first spatial data and the second spatial data further satisfying the predetermined requirements in a storage medium if it is judged that the difference satisfies the predetermined requirements.

23. The map data generation device according to claim 19,

wherein the first data acquisition unit acquires the first attribute data indicating contents related to the first sensor, wherein the second data acquisition unit acquires the second attribute data indicating contents related to the second sensor, and wherein the spatial data evaluation unit evaluates the validity of the first spatial data as the map data on the basis of contents related to the first sensor and contents related to the second sensor.

24. The map data generation device according to claim 19, wherein the spatial data evaluation unit evaluates the validity of the first spatial data as the map data from two or more items of at least sensor accuracy, a sensor resolution, a sensor measurement distance, a sensor viewing angle, and a sensor attachment position.

25. The map data generation device according to claim 19,

wherein the spatial data evaluation unit judges whether or not the validity of the first spatial data as the map data satisfies predetermined requirements, and wherein the at least one processor or circuit is further configured to function as: a spatial data management unit configured to delete the first spatial data from a storage medium if it is judged that the validity of the first spatial data as the map data does not satisfy the predetermined requirements.

26. The map data generation device according to claim 19,

wherein the spatial data evaluation unit judges whether or not the validity of the first spatial data as the map data satisfies predetermined requirements, and wherein the at least one processor or circuit is further configured to function as: a spatial data management unit configured to leave the first spatial data being stored in a storage medium if it is judged that the validity of the first spatial data as the map data satisfies the predetermined requirements.

27. The map data generation device according to claim 19,

wherein the second data acquisition unit further acquires second spatial data generated by measuring an object present in the space with the second sensor when the second movable apparatus autonomously moves in the space, wherein the spatial data evaluation unit evaluates validity of the second spatial data as the map data, generates the evaluation data indicating evaluation results of the validity of the second spatial data, and judges whether or not the validity of the second spatial data as the map data satisfies predetermined requirements, and wherein the at least one processor or circuit is further configured to function as:

a spatial data management unit configured to store the second spatial data in a storage medium if it is judged that the validity of the second spatial data as the map data satisfies the predetermined requirements.

28. A non-transitory computer-readable storage medium configured to store a computer program comprising instructions for executing following processes:

acquiring first spatial data generated by measuring an object present in a space with a first sensor mounted in a first movable apparatus, and first attribute data indicating an attribute of the first movable apparatus;
acquiring second attribute data indicating an attribute of a second movable apparatus which is different from the first movable apparatus and in which a second sensor is mounted;
evaluating validity of the first spatial data as map data which is used when the second movable apparatus autonomously moves in the space on the basis of the first attribute data and the second attribute data, and generating evaluation data indicating evaluation results of the validity of the first spatial data; and
providing the first spatial data as the map data to the second movable apparatus if contents indicated by the evaluation data satisfy requirements necessary for the second movable apparatus.

29. A map data generation method comprising:

acquiring first spatial data generated by measuring an object present in a space with a first sensor mounted in a first movable apparatus, and first attribute data indicating an attribute of the first movable apparatus;
acquiring second attribute data indicating an attribute of a second movable apparatus which is different from the first movable apparatus and in which a second sensor is mounted;
evaluating validity of the first spatial data as map data which is used when the second movable apparatus autonomously moves in the space on the basis of the first attribute data and the second attribute data, and generating evaluation data indicating evaluation results of the validity of the first spatial data; and
providing the first spatial data as the map data to the second movable apparatus if contents indicated by the evaluation data satisfy requirements necessary for the second movable apparatus.

FIG. 1

# FIG. 2

FIG. 3

## FIG. 4

┌─ 21a
┌──────────────────────────────────────┐
│      MAP DATA GENERATION DEVICE        │
│                                        │
│                            ┌─ 211a     │
│        ┌────────────────────────┐      │
│        │     SPATIAL DATA       │      │
│        │   GENERATION UNIT      │      │
│        └────────────────────────┘      │
│                                        │
│                            ┌─ 212a     │
│        ┌────────────────────────┐      │
│        │     SPATIAL DATA       │      │
│        │   ACQUISITION UNIT     │      │
│        └────────────────────────┘      │
│                                        │
│                            ┌─ 213a     │
│        ┌────────────────────────┐      │
│        │    ATTRIBUTE DATA      │      │
│        │   ACQUISITION UNIT     │      │
│        └────────────────────────┘      │
│                                        │
│                            ┌─ 215a     │
│        ┌────────────────────────┐      │
│        │   MAP DATA GENERATION  │      │
│        │          UNIT          │      │
│        └────────────────────────┘      │
│                                        │
│                            ┌─ 216a     │
│        ┌────────────────────────┐      │
│        │  MAP DATA TRANSMISSION │      │
│        │          UNIT          │      │
│        └────────────────────────┘      │
│                                        │
└──────────────────────────────────────┘

# FIG. 5

P

ATTRIBUTE DATA

P1

TYPE DATA

P2

SENSOR DATA

P3

POSITION/ORIENTATION
MEASUREMENT DATA

P4

TRAVELING PATH DATA

P5

WORK CONTENT DATA

FIG. 6

```
                    ┌─────────────┐
                    │    START    │
                    └──────┬──────┘
                           │
                           ▼
        ┌──────────────────────────────────────┐
        │    INITIALIZE RESULTS OBTAINED BY     │
        │  MEASURING OBJECT INDICATED BY        │──S61
        │    SPATIAL DATA WITH SENSOR           │
        └──────────────────┬───────────────────┘
                           │
        ┌──────────────────▼───────────────────┐
        │  GENERATE SPATIAL DATA ALLOWED TO BE  │
        │  USED IN COMMON AMONG PLURALITY OF    │──S62
        │  MOVABLE APPARATUSES BY MEASURING     │
        │  OBJECT PRESENT IN SPACE WITH SENSOR  │
        └──────────────────┬───────────────────┘
                           │
        ┌──────────────────▼───────────────────┐
        │    ACQUIRE SPATIAL DATA GENERATED IN  │──S63
        │              STEP S62                 │
        └──────────────────┬───────────────────┘
                           │
        ┌──────────────────▼───────────────────┐
        │  SAVE SPATIAL DATA ACQUIRED IN STEP   │──S64
        │      S63 IN RECORDING MEDIUM          │
        └──────────────────┬───────────────────┘
                           │
                           ▼                     S65
                    ╱─────────────╲
          NO      ╱  HAS INSTRUCTION OF ╲
        ◄────────╱ ENDING PROCESSING IN WHICH ╲
                 ╲ SPATIAL DATA IS ACQUIRED AND ╱
                  ╲ SAVED IN RECORDING MEDIUM ╱
                   ╲   BEEN RECEIVED?       ╱
                    ╲─────────────╱
                           │ YES
                           ▼
                    ┌─────────────┐
                    │     END     │
                    └─────────────┘
```

28

## FIG. 7

```
┌─────────────┐
│    START    │
└─────────────┘
       │
       ▼
┌──────────────────────────────────┐
│ INITIALIZE MAP INDICATED BY MAP  │─── S71
│ DATA                             │
└──────────────────────────────────┘
       │
       ▼ ◄─────────────────────────────┐
┌──────────────────────────────────┐  │
│ ACQUIRE ATTRIBUTE DATA INDICATING│  │
│ ATTRIBUTES OF MOVABLE APPARATUSES│─── S72
│ AUTONOMOUSLY MOVING IN SPACE     │  │
└──────────────────────────────────┘  │
       │                              │
       ▼                              │
┌──────────────────────────────────┐  │
│ ACQUIRE SPATIAL DATA SAVED IN     │─── S73
│ RECORDING MEDIUM                  │  │
└──────────────────────────────────┘  │
       │                              │
       ▼                              │
┌──────────────────────────────────┐  │
│ GENERATE MAP DATA USED WHEN       │  │
│ MOVABLE APPARATUSES AUTONOMOUSLY  │  │
│ MOVE IN SPACE ON BASIS OF ATTRIBUTE│─── S74
│ DATA ACQUIRED IN STEP S72 AND     │  │
│ SPATIAL DATA ACQUIRED IN STEP S73 │  │
└──────────────────────────────────┘  │
       │                              │
       ▼                              │
┌──────────────────────────────────┐  │
│ TRANSMIT MAP DATA GENERATED IN STEP│─── S75
│ S74 TO MOVABLE APPARATUSES        │  │
└──────────────────────────────────┘  │
       │                              │
       ▼                              │
      ╱ ╲                    S76      │
     ╱   ╲                           │
    ╱ HAS  ╲                         │
   ╱INSTRUCTION OF╲  NO              │
  ╱ ENDING PROCESSING IN WHICH ╲─────┘
  ╲ MAP DATA IS GENERATED AND  ╱
   ╲ TRANSMITTED TO MOVABLE   ╱
    ╲ APPARATUSES BEEN       ╱
     ╲   RECEIVED?          ╱
      ╲                    ╱
       ╲                  ╱
          │ YES
          ▼
    ┌─────────┐
    │   END   │
    └─────────┘
```

FIG. 8

21b

## MAP DATA GENERATION DEVICE

211b

SPATIAL DATA
GENERATION UNIT

212b

SPATIAL DATA
ACQUISITION UNIT

213b

ATTRIBUTE DATA
ACQUISITION UNIT

214b

SIMILARITY CALCULATION
UNIT

215b

MAP DATA GENERATION
UNIT

216b

MAP DATA TRANSMISSION
UNIT

# FIG. 9

START

↓

INITIALIZE RESULTS OBTAINED BY MEASURING OBJECT INDICATED BY SPATIAL DATA WITH SENSOR —S91

↓

GENERATE PLURALITY OF PIECES OF SPATIAL DATA FOR EACH OF MOVABLE APPARATUSES BY MEASURING OBJECT PRESENT IN SPACE WITH SENSOR —S92

↓

ACQUIRE PLURALITY OF PIECES OF SPATIAL DATA GENERATED IN STEP S92 —S93

↓

SAVE PLURALITY OF PIECES OF SPATIAL DATA ACQUIRED IN STEP S93 IN RECORDING MEDIUM —S94

↓

S95

HAS INSTRUCTION OF ENDING PROCESSING IN WHICH SPATIAL DATA IS ACQUIRED AND SAVED IN RECORDING MEDIUM BEEN RECEIVED?

NO

YES

↓

END

## FIG.10

START

INITIALIZE MAP INDICATED BY MAP DATA ~S101

ACQUIRE PLURALITY OF PIECES OF ATTRIBUTE DATA INDICATING ATTRIBUTES OF MOVABLE APPARATUSES AUTONOMOUSLY MOVING IN SPACE FOR EACH OF MOVABLE APPARATUSES ~S102

CALCULATE SIMILARITY INDICATING DEGREE OF SIMILARITY OF MOVABLE APPARATUS WITH RESPECT TO OTHER MOVABLE APPARATUSES ~S103

SELECT AND ACQUIRE SPATIAL DATA SELECTED FROM PLURALITY OF PIECES OF SPATIAL DATA SAVED IN RECORDING MEDIUM ON BASIS OF SIMILARITY CALCULATED IN STEP S103 ~S104

S105
CAN SPATIAL DATA ACQUIRED IN STEP S104 BE USED AS MAP DATA WITHOUT ANY CHANGE? — NO

YES

GENERATE MAP DATA USED WHEN MOVABLE APPARATUSES AUTONOMOUSLY MOVE IN SPACE ON BASIS OF ATTRIBUTE DATA ACQUIRED IN STEP S102 AND SPATIAL DATA ACQUIRED IN STEP S104 ~S106

TRANSMIT MAP DATA GENERATED IN STEP S106 TO MOVABLE APPARATUSES ~S107

S108
HAS INSTRUCTION OF ENDING PROCESSING IN WHICH MAP DATA IS GENERATED AND TRANSMITTED TO MOVABLE APPARATUSES BEEN RECEIVED? — NO

YES

END

FIG. 11

21c

## MAP DATA GENERATION DEVICE

212c

SPATIAL DATA ACQUISITION UNIT

217c

CONFIDENTIAL DATA ACQUISITION
UNIT

213c

ATTRIBUTE DATA ACQUISITION
UNIT

215c

MAP DATA GENERATION UNIT

218c

MAP DATA PROVIDING UNIT

FIG. 12

```
                                              ┌─ P
┌────────────────────────────────────────────┐
│               ATTRIBUTE DATA                │
│                                             │
│                               ┌─ P1         │
│     ┌─────────────────────────────┐         │
│     │         TYPE DATA           │         │
│     └─────────────────────────────┘         │
│                                             │
│                               ┌─ P2         │
│     ┌─────────────────────────────┐         │
│     │        SENSOR DATA          │         │
│     └─────────────────────────────┘         │
│                                             │
│                               ┌─ P6         │
│     ┌─────────────────────────────┐         │
│     │      ACCESS RIGHT DATA      │         │
│     └─────────────────────────────┘         │
│                                             │
│                               ┌─ P3         │
│     ┌─────────────────────────────┐         │
│     │    POSITION/ORIENTATION     │         │
│     │      MEASUREMENT DATA       │         │
│     └─────────────────────────────┘         │
│                                             │
│                               ┌─ P4         │
│     ┌─────────────────────────────┐         │
│     │     TRAVELING PATH DATA     │         │
│     └─────────────────────────────┘         │
│                                             │
│                               ┌─ P5         │
│     ┌─────────────────────────────┐         │
│     │     WORK CONTENT DATA       │         │
│     └─────────────────────────────┘         │
│                                             │
└─────────────────────────────────────────────┘
```

# FIG. 13

```
                    ┌──────────────┐
                    │    START     │
                    └──────┬───────┘
                           │
                           ▼
        ┌──────────────────────────────────────┐
        │         ACQUIRE SPATIAL DATA          │───S131
        └──────────────────┬───────────────────┘
                           │
                           ▼
        ┌──────────────────────────────────────┐
        │       ACQUIRE CONFIDENTIAL DATA       │───S132
        └──────────────────┬───────────────────┘
                           │
                           ▼
        ┌──────────────────────────────────────┐
        │         ACQUIRE ATTRIBUTE DATA        │───S133
        └──────────────────┬───────────────────┘
                           │
                           ▼
        ┌──────────────────────────────────────┐
        │ GENERATES MAP DATA WHICH DOES NOT     │───S134
        │ ALLOW CONFIDENTIAL INFORMATION TO BE  │
        │ BROWSED ON BASIS OF SPATIAL DATA,     │
        │ CONFIDENTIAL DATA, AND ATTRIBUTE DATA │
        └──────────────────┬───────────────────┘
                           │
                           ▼
        ┌──────────────────────────────────────┐
        │ PROVIDE MAP DATA GENERATED IN STEP    │───S135
        │ S134 TO MOVABLE APPARATUSES           │
        └──────────────────┬───────────────────┘
                           │
                           ▼
                    ┌──────────────┐
                    │     END      │
                    └──────────────┘
```

# FIG. 14

21d

## MAP DATA GENERATION DEVICE

141d

### FIRST DATA ACQUISITION UNIT

142d

### SECOND DATA ACQUISITION UNIT

143d

### SPATIAL DATA EVALUATION UNIT

144d

### SPATIAL DATA MANAGEMENT UNIT

145d

### MAP DATA PROVIDING UNIT

## FIG. 15

```
                    START

                                          ┌ S151
        INITIALIZE MAP DATA GENERATION DEVICE

                                          ┌ S152
        ACQUIRE FIRST SPATIAL DATA AND
             FIRST ATTRIBUTE DATA

                                          ┌ S153
        ACQUIRE SECOND ATTRIBUTE DATA

                                          ┌ S154
      EVALUATE VALIDITY OF FIRST SPATIAL DATA AS MAP
      DATA ON BASIS OF FIRST ATTRIBUTE DATA AND
        SECOND ATTRIBUTE DATA AND GENERATE
                  EVALUATION DATA

                                          ┌ S155
      ASSOCIATE FIRST SPATIAL DATA ACQUIRED IN STEP S152
      AND EVALUATION DATA GENERATED IN STEP S154 WITH
                    EACH OTHER

                                          ┌ S156
              DO CONTENTS INDICATED
      BY EVALUATION DATA SATISFY REQUIREMENTS      NO
         NECESSARY FOR SECOND MOVABLE
                  APPARATUS?

                       YES                ┌ S157
      PROVIDE FIRST SPATIAL DATA TO SECOND MOVABLE
            APPARATUS AS MAP DATA

                                          ┌ S158
              IS SECOND MOVABLE APPARATUS
   YES   WHICH BECOMES TARGET OF PROCESSING
         IN STEP S153 TO STEP S157 PRESENT?

                       NO

                    END
```

## FIG. 16

```
                    ┌──────────────┐
                    │    START     │
                    └──────┬───────┘
                           │
                           ▼                    ┌S161
        ┌──────────────────────────────────────┐
        │    RECOGNIZE DIFFERENCE BETWEEN       │
        │    CONTENTS INDICATED BY FIRST        │
        │   ATTRIBUTE DATA AND CONTENTS         │
        │ INDICATED BY SECOND ATTRIBUTE DATA    │
        └──────────────────┬───────────────────┘
                           │
                           ▼                    ┌S162
                  ╱────────────────╲
                 ╱  DOES DIFFERENCE  ╲
                ╱ RECOGNIZED IN STEP S161 SATISFY ╲──── NO ──────┐
                ╲ PREDETERMINED REQUIREMENTS? ╱                  │
                 ╲────────────────╱                              │
                           │                                     │
                          YES                                    │
                           ▼            ┌S163                    ▼              ┌S164
        ┌──────────────────────────────┐      ┌──────────────────────────────┐
        │ INCREASE EVALUATION VALUE RELATED │  │ DECREASE EVALUATION VALUE RELATED │
        │  TO VALIDITY OF FIRST SPATIAL DATA │  │  TO VALIDITY OF FIRST SPATIAL DATA │
        │          AS MAP DATA          │      │          AS MAP DATA          │
        └──────────────┬───────────────┘      └───────────────┬──────────────┘
                       │                                       │
                       ▼◄──────────────────────────────────────┘
                ╱──────────────╲              ┌S165
               ╱  HAS INSTRUCTION OF ╲
    ┌── NO ───╱ ENDING PROCESSING IN WHICH VALIDITY ╲
    │         ╲ OF FIRST SPATIAL DATA AS MAP DATA ╱
    │          ╲  IS EVALUATED BEEN RECEIVED? ╱
    │           ╲──────────────╱
    │                  │
    │                 YES
    │                  ▼
    │           ┌──────────────┐
    │           │     END      │
    │           └──────────────┘
    └──────────────────────────────
```

38

FIG. 17

START

S171
SELECT FIRST SPATIAL DATA FOR
EXECUTING PROCESSING IN STEP S172

S172
DOES VALIDITY OF
FIRST SPATIAL DATA AS MAP DATA
SELECTED IN STEP S171 SATISFY
PREDETERMINED REQUIREMENTS?

NO

YES

S173
DELETE FIRST SPATIAL DATA SELECTED
IN STEP S171 FROM STORAGE MEDIUM

S174
KEEP FIRST SPATIAL DATA SELECTED IN
STEP S171 STORED IN STORAGE MEDIUM

S175
IS FIRST SPATIAL DATA
FOR WHICH PROCESSING IN STEP S172
SHOULD BE EXECUTED PRESENT?

YES

END

END

**REFERENCES CITED IN THE DESCRIPTION**

**Patent documents cited in the description**

- JP 2021077053 A
- JP 2022182433 A
- JP 2022198569 A
- JP 2022198427 A